(19) 

Europäisches
Patentamt
European
Patent Office
Office européen
des brevets

(11) **EP 4 319 958 B1**

(12) **EUROPEAN PATENT SPECIFICATION**

(45) Date of publication and mention
of the grant of the patent:
**05.11.2025  Bulletin 2025/45**

(21) Application number: **22715324.4**

(22) Date of filing: **17.03.2022**

(51) International Patent Classification (IPC):
**B29C 49/68** *(2006.01)*     **B29C 49/64** *(2006.01)*
**B29B 13/02** *(2006.01)*

(52) Cooperative Patent Classification (CPC):
**B29B 13/023; B29C 49/6418; B29C 49/682;**
B29C 49/0062; B29C 49/06; B29C 49/42085;
B29C 49/42109; B29C 49/68; B29C 49/681;
B29C 49/6825; B29C 49/6835; B29C 2035/0822;
B29C 2035/0838; B29C 2949/0715;
B29K 2067/003;                              (Cont.)

(86) International application number:
**PCT/IB2022/052426**

(87) International publication number:
**WO 2022/214894 (13.10.2022 Gazette 2022/41)**

(54) **AN APPARATUS FOR HEATING PREFORMS**

VORRICHTUNG ZUM ERWÄRMEN VON VORFORMLINGEN

APPAREIL POUR CHAUFFER DES PRÉFORMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.04.2021  IT 202100008870**

(43) Date of publication of application:
**14.02.2024  Bulletin 2024/07**

(73) Proprietor: **SMI S.p.A.**
**24121 Bergamo (IT)**

(72) Inventors:
 • **MILESI, Giovanni**
  **24121 Bergamo (IT)**

 • **CORTINOVIS, Ivan**
  **24121 Bergamo (IT)**

(74) Representative: **Long, Giorgio et al**
**Jacobacci & Partners S.p.A.**
**Via Senato, 8**
**20121 Milano (IT)**

(56) References cited:
**EP-B1- 2 561 972        CN-B- 102 837 420**
**DE-A1- 102009 047 536  FR-A1- 3 088 027**
**JP-A- 2009 051 198      US-A1- 2011 132 892**
**US-A1- 2012 269 918     US-A1- 2016 075 075**
**US-A1- 2021 023 763     US-B2- 9 296 148**

EP 4 319 958 B1

(52) Cooperative Patent Classification (CPC): (Cont.)
B29L 2031/7158

**Description**

The present invention relates to a continuous or discontinuous linear system for heating the preforms upstream of a blowing or stretch-blowing machine, in particular a heating system by means of infrared radiation generated by one or more monochromatic laser sources.

FR 3 088 027 A1, EP 2 561 972 B1, US 9 296 148 B2, JP 2009 051198 A, CN 102 837 420 B disclose a continuous or discontinuous apparatus of the linear type for heating preforms (P), in accordance of the preamble of claim 1. US 2021/023763 A1, DE 10 2009 047536 A1, US 2011/132892 A1, US 2012/269918 A1 disclose a continuous or discontinuous apparatus for heating preforms, comprising a plurality of heating devices configured so as to be arranged outside the preform and to radiate an electromagnetic radiation in the infrared range generated by one or more monochromatic laser sources and forming, in such a heating element, a radiation disk according to a radial symmetry with respect to the center of the preform axis.

In a packaging line of beverages in plastic material bottles, the first step consists in heating the preforms from which the bottle will then be blown, up to the softening point thereof.

This operation usually is performed in specific ovens in which the preforms are passed in a row, at a reduced step, and in which lamps emitting infrared radiation providing for the heating up to the desired temperature, are arranged.

The preforms are guided along the heating path by means of spindles which, by virtue of the action of suitable cams, are introduced into the preform. At the end of the path in the oven, the spindles are disengaged from the preforms by virtue of lifting cams, and the preforms are transferred to a movement system (conventionally distribution stars) which feeds them to the blowing machine.

Such ovens are of considerable size since the path of the preforms is to be long enough as to allow the necessary heating times. In fact, the heat is diffused by the lamps along the path of the preforms, whereby, despite the provision of adequate reflective surfaces, the dispersion of heat into the environment is considerable.

The infrared lamps are conventionally tungsten lamps which have a maximum emission efficiency at 3000°K. However, considering that the various plastic materials have energy absorption spectra in rather narrow wavelength ranges, while tungsten lamps operated at maximum efficiency emit energy at very different wavelengths, only a small part of the energy is actually absorbed by the preforms, the remainder being dispersed into the environment. For example, if PET preforms are considered, which represent about 95% of the global market, the power employed for heating in these conditions compared to the power actually stored by the preform has values indicating low efficiency, no more than 15% of the electrical energy introduced being effectively converted into thermal energy absorbed by the preforms.

The dispersion of unusable thermal energy from the preforms also requires an efficient refrigeration system to avoid the system from overheating, which leads to further energy waste.

The need is thus felt to provide a preform heating system which has greater energy efficiency and which, possibly, has smaller dimensions than the ovens currently on the market.

Furthermore, the preform is currently heated by means of a grid of lamps which develop radiation from an overall flat surface and which therefore does not allow homogeneous radiation of the cylindrical container.

The underlying problem of the present invention is thus to provide a preform heating device which solves the aforesaid drawbacks inherent in the known technology and which allows energy savings to be obtained while optimizing the preform heating.

In particular, the present invention proposes radiation concentrated on the single preform, so as to avoid radiation from being dispersed into the environment.

The present invention may also use one or more monochromatic sources of convenient wavelengths, chosen from among those which have an appropriate absorption coefficient for PET, or other commonly used plastic materials, such as polyester resins, such as, but not limited to, PET (polyethylene terephthalate), PEF (polyethylene 2,5-furandicarboxylate, also defined as polyethylene furanoate, or polyethylene furan), PLA (poly lactic acid or poly lactic resin), PEN (polyethylene naphthalate) and polyolefin resins such as PE (polyethylene), PP (polypropylene) also with the addition of copolymers, suitable for a convenient heating of the material. Such a monochromatic radiation is available based on currently known technologies.

The heating system of the present invention follows the cylindrical geometry of the object to be heated, that is the preform, so as to radiate the preform according to a cylindrical geometry from the outside and to concentrate the radiation towards the inside of the preform.

Therefore, the object of the present invention is a continuous or discontinuous (so-called "batch") linear heating apparatus of preforms as described in the appended claims, the definitions of which form an integral part of the present description.

The object of the present invention is a discontinuous linear apparatus in accordance with claim 1.

A second object is a discontinuous linear apparatus for heating preforms, comprising a plurality of heating devices configured so as to singularly heat a preform from the outside, wherein said heating element is supplied by a laser device.

A further object is a discontinuous linear apparatus for heating preforms comprising a plurality of heating devices configured so as to singularly illuminate a preform from the outside and to distribute the radiation emitted by a laser source, or a laser source assembly which radiation converges in an optical path aiming to concentrate such a radiation towards the central axis of the preform.

Another object is a continuous linear apparatus in which the preforms and the heating devices synchronously move along a linear heating path of the preforms.

A different object is a discontinuous linear apparatus in which the preforms are fixed with respect to a vertical direction and the heating devices move vertically with respect to the preforms, said apparatus comprising a blowing/-stretch-blowing section of the heated preforms.

A further object is a discontinuous linear apparatus in which the preforms are fixed with respect to a vertical direction and the heating devices move vertically with respect to the preforms, said apparatus comprising a blowing/-stretch-blowing section of the heated preforms and in which there is provided a buffer area for the preforms waiting to be heated and for the preforms waiting for blowing/stretch-blowing.

Another object is a compact machine comprising the heating apparatus of the invention and a blowing/stretch-blowing unit of the heated preforms.

Further features and advantages of the present invention will become more apparent from the description of certain embodiments thereof, given hereafter only by way of a non-limiting, indicative example, with reference to the following drawings:

Figure 1 shows a partial diagrammatic top plan view of a heating apparatus of preforms comprising the heating device of the invention;

Figures 2 and 3 show partial perspective views of the apparatus in Figure 1;

Figure 4 shows a side sectional view of a heating bell indicating the provided path of the radiation beams;

Figure 5 shows a side sectional view of a detail in Figure 4;

Figure 6 shows a perspective view of a blowing/stretch-blowing machine comprising the heating apparatus of the preforms according to an embodiment of the invention;

Figure 7 shows a top plan view of the machine in Figure 6;

Figure 8 shows a perspective view of a detail of the heating apparatus of the preforms in Figure 6;

Figure 9A shows a cross-section view of the apparatus in Figure 8;

Figure 9B shows a front view according to direction A in Figure 9A;

Figure 10 shows a perspective view of a detail of the apparatus in Figure 8;

Figure 11 shows a perspective view of a different detail of the apparatus in Figure 8;

Figure 12 shows a perspective view of a blowing/stretch-blowing machine comprising the heating apparatus of the preforms according to an embodiment of the invention;

Figure 13 shows a partial perspective view of a different viewpoint of the machine in Figure 12;

Figure 14 shows a perspective view of a detail of the machine in Figure 12;

Figure 15 shows a front view of the heating apparatus of the preforms in Figure 12;

Figure 16 shows a perspective view of a detail of the apparatus in Figure 15;

Figure 17 shows a different perspective view of the detail in Figure 16;

Figure 18 shows a perspective view of a blowing/stretch-blowing machine comprising the heating apparatus of the preforms according to an embodiment of the invention;

Figure 19 shows a different perspective view of the machine in Figure 18;

Figure 20 shows a side sectional view of a different embodiment of the heating bell in Figure 4;

Figure 21 shows the view in Figure 20, indicating the provided path of the radiation beams;

Figure 22 shows a sectional side view of a detail of the heating bell in Figure 20;

Figure 23 shows a diagrammatic side view of a movement system of the heating bells according to a different embodiment of the invention;

Figure 24 shows a perspective view of a detail of the embodiment in Figure 23;

Figure 25 shows a perspective view of a variant of the detail in Figure 24;

Figure 26 shows a partial diagrammatic side view of the diagram in Figure 23;

Figures 27A, 27B and 27C show perspective views of three variants of the diagram in Figure 23;

Figures 28A and 28B illustrate the movement kinematics of the heating bells in the embodiment in Figure 23;

Figures 29A, 29B and 29C illustrate various options of lighting operating diagram;

Figure 30 shows a perspective view of a blowing/stretch-blowing machine comprising the movement system of the heating bells in Figure 23.

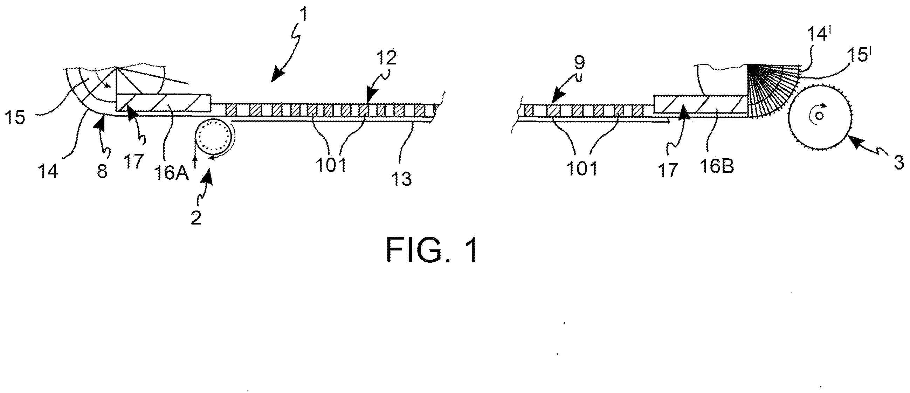

With reference to Figure 1, numeral 1 indicates a linear heating apparatus of preforms, conventionally known as preform oven, according to the invention.

The heating apparatus 1 is operatively connected to movement means 2, 3 of the preforms entering and leaving apparatus 1, respectively. Such movement means 2, 3 conventionally consist of distribution stars comprising a series of gripping means, for example grooves or recesses, adapted to engage the preforms, for example at the neck.

The movement means 3 for the preforms exiting apparatus 1 in turn are operatively connected to a blowing or stretch-blowing machine placed downstream, comprising a plurality of molds into which the heated preform is inserted and from which it exits in the form of blown (or blown-stretched) bottle.

Apparatus 1 comprises a plurality of fixed heating devices 101 and transport means 8 adapted to discontinuously move the preforms P along a processing line 12 so that a heating device 101 corresponds to each preform.

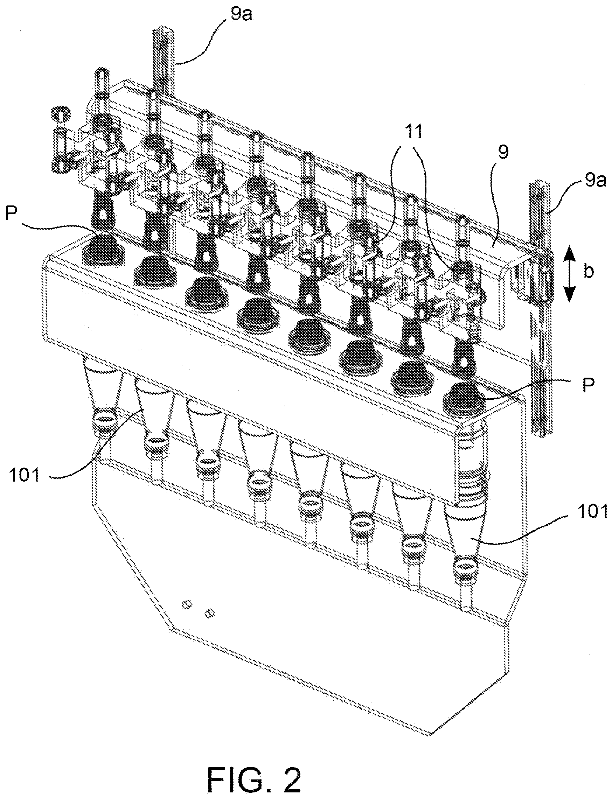

A plurality of spindles 11 is slidingly supported along the processing line 12 (Fig. 2), the spindles being configured so as to temporarily engage the preforms P to position them along the processing line 12 at respective heating devices 101, where the preforms P are heated up to the softening point thereof. The transport means 8 comprise a track 9 on which the plurality of spindles 11 slide, each adapted to engage a preform, and first and second driving wheels 15, 15', at least one of which is motorized. Track 9 comprises a first rectilinear stretch 13 corresponding to the processing line 12, and further comprises a second rectilinear stretch (not shown), which substantially is parallel to the first rectilinear stretch 13, and two curvilinear stretches 14, 14' for the return of the spindles without preforms to the gripping point of the preforms P at the movement means 2 of the preforms P entering oven 1.

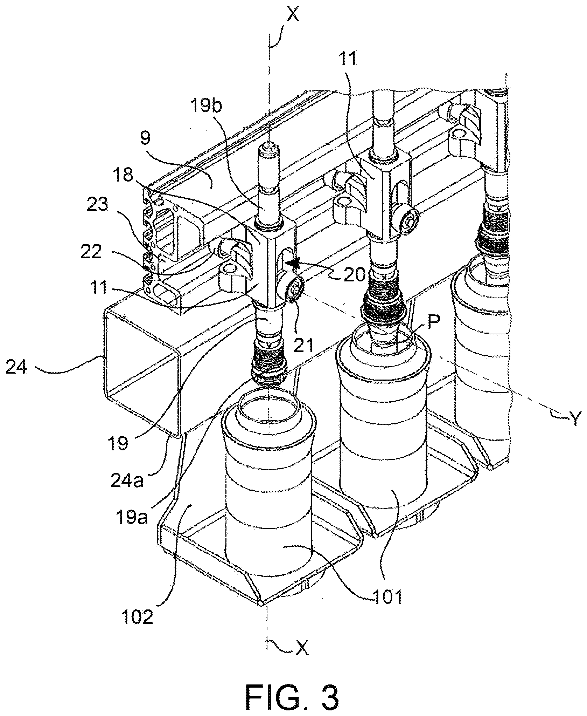

Track 9 is movably associated with a support structure 24 (Fig. 3) which extends at least in the stretch of the processing line 12. In particular, track 9 is vertically slidable in the two directions indicated by arrow b, along specific guides 9a, as shown in Figure 2. Such a vertical movement is implemented by virtue of suitable actuators (not shown) .

The spindles 11 may transit along track 9, being arranged on a rack, a chain or a belt moved by the driving wheel(s) 15, 15'.

As mentioned, the movement of the spindles is discontinuous, that is the spindles 11 with the respective preforms P slide along the processing line 12 up to the point in which each fixed heating device 101 is aligned in vertically upper position with a mandrel 11. At this point, track 9 supporting the spindles is brought into a lowered position so that the preforms P are inserted into the respective heating devices 101, as described below. At the end of the heating, track 9 is brought back into the raised position, thus freeing the preforms heated by the respective heating devices 101. A release system of the spindles 11 from the chain or rack horizontally driving them is provided to allow track 9 to perform the vertical movement described above. For example, they may be associated with the chain or rack by means of hooks which keep them hung thereto in removable manner.

In certain embodiments, the transport means 8 of apparatus 1 further comprise movement and spacing means of the spindles 11. Such movement means comprise a first auger 16A arranged at the feed point of the preforms into the oven, between the first driving wheel 15 and the first rectilinear stretch 13 of track 9, and a second auger 16B arranged at the joining point between the first rectilinear stretch 13 of track 9 and the second driving wheel 15'.

Both augers 16A, 16B comprise a varying pitch spiral groove 17 intended to interfere with a suitable thrust roller of each spindle 11. The augers 16A, 16B are mounted in inverted position along the travel direction of the spindles 11, so that, for example, the first auger 16A has a greater pitch upstream along the travel direction, while the second auger 16B has the greater pitch downstream. In general, the varying pitch of the spiral grooves 17 is dictated by the difference in pitch between the movement means 2, 3 of the preforms and the heating devices 101 on the processing line 12. If such a difference in pitch is null, the augers 16A, 16B may be omitted.

The augers 16A, 16B may be moved independently but synchronously by respective drive systems (not shown), or by a single drive system equipped with mechanical transmission.

The spindles 11 are of the conventional type. A spindle 11 comprises a body 18 (Fig. 3) inside of which a gripper finger 19 for a preform P is slidingly inserted. The gripper finger 19 extends along a vertical axis X-X to grip and release the preform.

The gripper finger 19 comprises a gripper portion 19a, which projects downwards and is configured so as to be inserted into the cavity of a preform P so as to engage therewith, and an actuation portion 19b, which is at least partly inserted in the body 18 of spindle 11.

The gripper finger 19 is slidingly supported so as to vertically move between a retracted position (or release position of preform P) and a lowered position (or engaged position with preform P). For this purpose, body 18 has a vertically extending slot 20, from which a roller 21 protrudes which is integral with the actuation portion 19b of the gripper finger 19 and having a rotation axis Y perpendicular to axis X-X of the gripper finger 19. Roller 21 acts as driven member of a cam (not shown) configured to keep the gripper finger 19 in lowered engaged position with preform P along the processing line 12.

A guide member 22, conventionally a bearing, configured so as to slide on a specific slide 23 positioned along track 9, also is coupled to the body 18 of spindle 11. Thereby, the plurality of spindles 11 is slidingly carried along track 9.

The heating device 101 is configured so as to singularly heat a preform P by radially sending the electromagnetic radiation from the outside towards the inside of the preform.

The heating devices 101, configured to receive a preform P therein, each comprise a support plate 102 fixed on the lower portion 24a of the support structure 24 so as to arrange the heating devices 101 below the movable spindles 11 and with the same pitch as the latter.

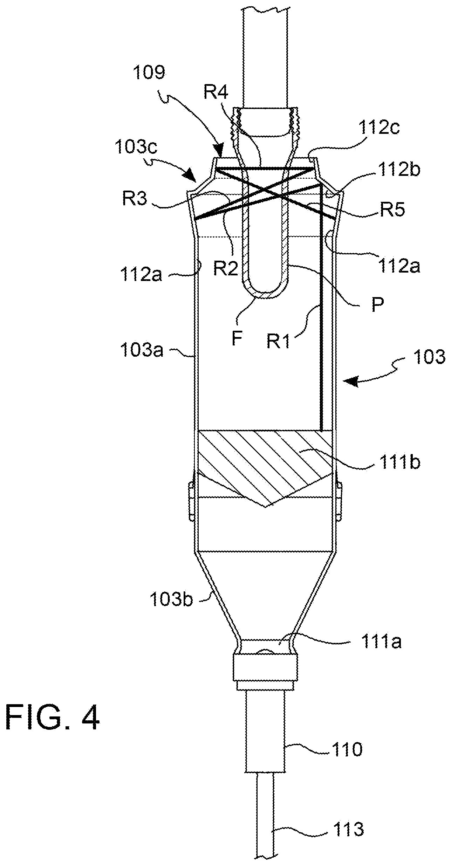

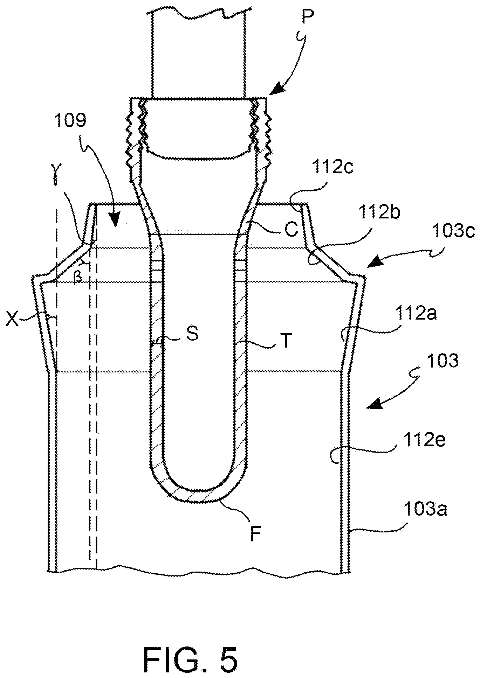

With reference to Figures 4 and 5, the heating device 101 comprises a heating bell 103 configured so as to accommodate therein preform P associated with a spindle 11 during the vertical movement thereof performed by the respective cam.

The heating bell 103 comprises a substantially cylindrical hollow body 103a, a conical portion 103b placed at one end of body 103a, and a reflective portion 103c placed at the opposite end of body 103a.

The heating bell 103 has an opening 109, coaxial to the longitudinal axis X-X of the bell, at the reflective portion 103c, while it comprises a collimator member 110 at the end of the conical portion 103b.

Downstream of the optical path of the collimator member 110, the conical portion 103b of the heating bell 103 comprises a first lens or axicon 111a placed at the end of said conical portion 103b connected to the collimator member 110. A second lens or axicon 111b is placed in the lower section of the cylindrical body 103a.

The lenses and axicons employed are made of a material with an adequate refractive index in the radiation employed so as to develop a suitable geometry of the exiting radiation beam, in the manner of a cylinder. The suitable materials are, for example but without limitation to those listed below: quartz, silica, magnesium fluoride, calcium fluoride, silicon, rare earth germanium or corundum or borate glass. The surfaces of these optical devices have a treatment necessary to reduce reflection in opposite direction to that of the radiation. Such optical devices are known to those skilled in the art and will not be described in detail.

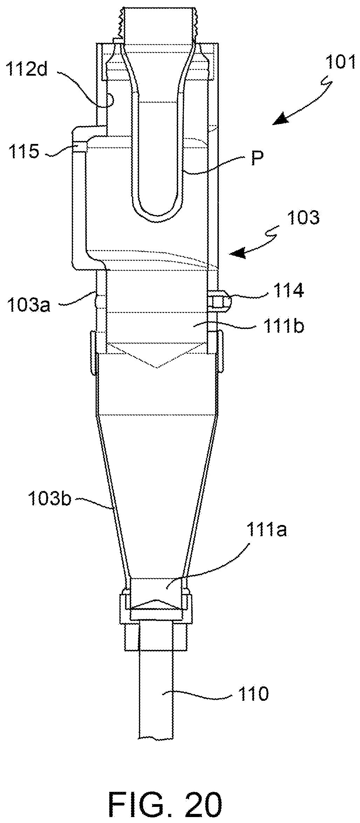

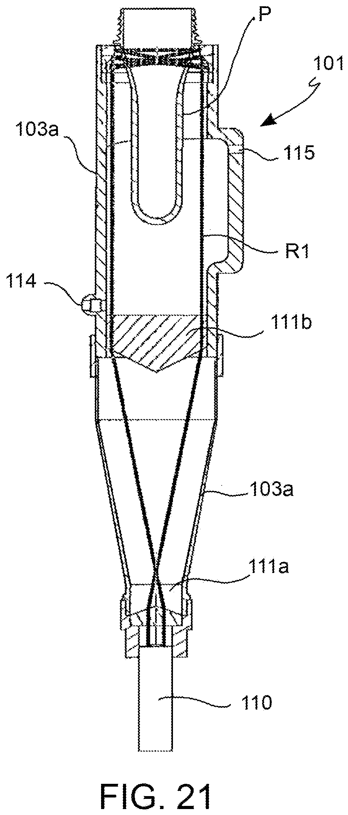

In certain embodiments, as shown in Figures 20-21, the surface of the second lens 111b in contact with the external atmosphere is kept clean by a system of filtered compressed air, which is blown by a suitable nozzle 114 which brushes the surface of the optical device and in the ascent thereof, acts against the entry of dust from the outside. The ascending airflow may alter the temperature of the preform being heated and therefore, a suction system, possibly under vacuum, of the air from slits 115 located higher up, is provided. This filtered air may easily be drawn, with a pressure reducer, from the blowing circuit of the preforms into the stretch-blowing carousel, which doesn't have oil and is already finely filtered for food application.

As shown in Figure 5, the reflective portion 103c comprises a system of frusto-conical reflective surfaces 112a, 112b, 112c, comprising, in sequence from body 103a towards opening 109, a first frusto-conical reflective surface 112a flared outwards, a second frusto-conical reflective surface 112b converging towards the central axis X-X of bell 103, a third frusto-conical reflective surface 112c converging towards the central axis X-X, wherein the first, second and third frusto-conical reflective surfaces 112a, 112b, 112c are tilted by an angle $\alpha$, an angle $\beta$, an angle $\gamma$, respectively, with respect to respective cylindrical surfaces which are coaxial to axis X-X.

In particular, angle $\alpha$ is smaller than angle $\beta$ and is greater than or equal to angle $\gamma$.

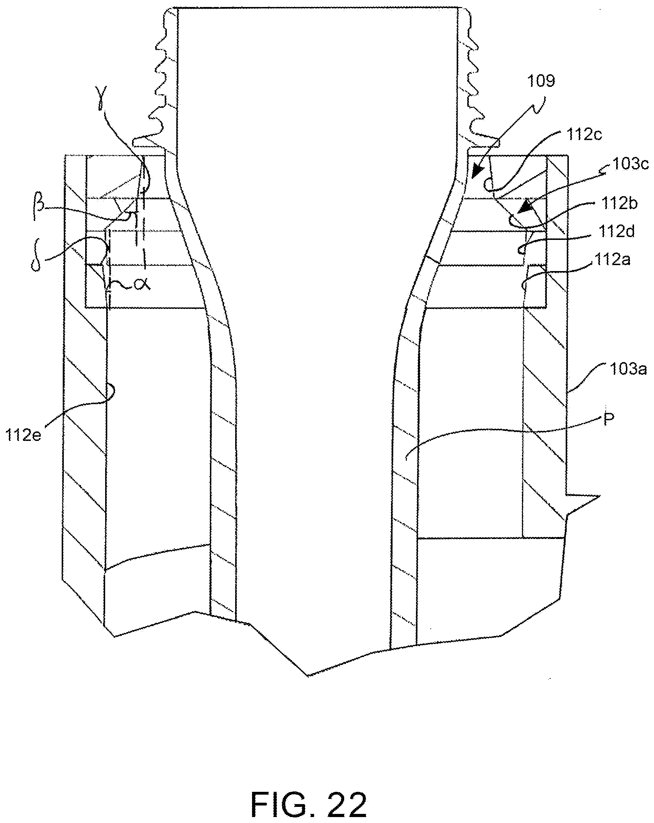

In certain embodiments, as shown in Figure 22, the reflective portion 103c comprises a fourth surface 112d flared upwards, placed between the first surface 112a and the second surface 112b, adapted to promote an increased containment of the radiation reflected by the surface of the preform. Surface 112d is tilted by an angle $\delta$ with respect to a respective cylindrical surface which is coaxial to axis X-X. In this embodiment, angle $\alpha$ is smaller than angle $\beta$ and is greater than or equal to angle $\gamma$ and angle $\delta$.

A substantially cylindrical absorbent surface 112e, obtained by coating the upper portion of body 103a with highly absorbent substances in the infrared range, is placed between body 103a and the first frusto-conical reflective surface 112a. An example is a carbon or "black oxide" coating after depositing a layer of zinc/molybdenum on the material, conventionally metal, with which the heating bell 103 is made, which allows the adhesion of highly absorbent substances resistant to the high temperatures involved. Another example may be a surface treatment which makes surface 112e a "metasurface", that is capable of trapping most of the radiation in the most superficial layer by virtue of the particular structure thereof produced through nanotechnologies.

The collimator member 110 is fed by an optical fiber 113 which generates a collimated beam of infrared radiation, which is refracted by the two lenses or axicons 111a, 111b arranged in series, so as to generate a radiation cylinder R1 with the appropriate degree of homogeneity (Figure 4). Alternatively, instead of refractive devices such as axicons and lenses, it is possible to use diffractive optical elements, such as grids or nanostructures which utilize the phenomenon of diffraction and constructive and destructive interference.

As detailed in Figure 4, the radiation cylinder R1 illuminates the second frusto-conical reflective surface 112b of the reflection portion 103c and is reflected on the first frusto-conical reflective surface 112a (beam R2), then on the third frusto-conical reflective surface 112c (beam R3) and then again along the beams R4 and R5. The appropriate radiation in the manner of a radiation ring required for a heating operation according to the desired degree is achieved through various reflections between said frusto-conical reflective surfaces 112a, 112b, 112c and refractions in the thickness of the plastic material. This series of external and internal reflections leads to the convenient absorption of radiation and, hence, to optimal heating of the material with much higher accuracy than current lamp heating systems. The temperature distribution and the related gradients, by virtue of the phenomenon of heat deposition directly inside the material by the correct penetration of the selected radiation, allow the system according to the invention to offer much higher heating quality than that available now. Finally, the band 112e with highly absorbent treatment placed on the metal cylinder absorbs any residual radiation which may escape from the light ring generated between the surfaces 112a, 112b, 112c, 112d to confine the heat generation to the upper part.

The reflective surfaces may be made of highly reflective coatings, for example, but not limited to, gold, silver, or polished aluminum, and be protected by a clear layer, or may be made of dielectric multilayer material capable of increasing the reflectivity of the support. The outer structure of the heating bell 103, preferably made of metal material (for example aluminium), ensures suitable heat dissipation, absorption of the dispersed radiation, and suitable robustness.

The system of frusto-conical reflective surfaces 112a, 112b, 112c, 112d and the relative tilting angles $\alpha$, $\beta$, $\gamma$ and $\delta$ are configured so as to trap most of the infrared radiation in the radiation ring shown in Figure 3. The fourth reflective surface 112d, when present, does not intervene in a decisive manner to generate the heating light ring, however it has an important containment effect on the radiation generated by reflection on the different preform surfaces so as not to send an increased amount of energy to be absorbed onto the absorbent band 112e. Thereby, not only is the heating of the radiated portion of preform P optimized, but the radiation which may return to the optical fiber 113, and from there to the laser source, which would otherwise be damaged, is minimized. To make the system of the invention non-dependent on the particular geometry of the preform, the highly absorbent band 112e confines, as said, the radiation to the upper part of the heating bell.

The vertical movement of preform P, as mentioned, follows a predefined law of motion, not only to radiate the entire preform P, excluding the neck above the neck finish, but also to increase or decrease the radiation time as a function of the portion of preform to be treated and the specific heating requirements.

Furthermore, the laser source has its own modulability with a high degree of accuracy in addition to the variation in the sliding speed (law of motion) of the preform within the electromagnetic heating radiation circle.

In certain embodiments, the wavelength emitted by the laser source, or by an assembly of converging laser sources, may be modulated, thus obtaining a varying wavelength monochromatic radiation, or radiation formed by an assembly of monochromatic radiation beams, each with its own independently varying wavelength.

The possibility of modulating both the intensity of the emitted radiation and the law of motion of the relative preform-heating bell movement is a considerable advantage of the device of the invention. In fact, it is known that the conical portion of the preform placed immediately below the neck finish is conventionally subject to greater deformation and therefore could require greater heating, with respect to the other areas of the preform, to obtain a high plasticity. Another factor which may determine a greater or lesser duration of exposure of an area of the preform to the heating radiation is the variation in preform thickness.

The possibility of varying the radiation wavelength, or the wavelengths of the assembly of monochromatic radiations forming the overall radiated beam, allows the system to be adapted to preforms provided with particular thickness or particular crystallinity or containing particular additives, considering the fact that varying the wavelength obtains a varying absorption coefficient as a function of the specific need. Thereby, the heating system has the maximum flexibility and versatility.

In an embodiment, the law of motion will comprise the following steps:

a) introducing the bottom F of preform P into opening 109 of the heating bell 103;
b) related sliding of the tubular portion T of preform P with respect to the heating bell 103 at a first speed v1;
c) related sliding of the conical portion C of preform P with respect to the heating bell 103 at a second speed v2, lower than said first speed v1;
d) modulating the intensity of the infrared radiation as a function of said speeds v1, v2 and of thickness S of the wall of preform P,

in which said first and second speeds v1, v2 are inversely proportional to said thickness S, infrared radiation intensity being equal.

The variation of the vertical sliding speed of the preform is easily obtainable thanks to the drivers available on the market which drive the stepper motors or motors with permanent magnets or brushless motors, as described above. Then the operating computer/PLC of the machine stores a specific law of motion for each type of preform and type of container.

The heating apparatus 1 may comprise an optical collector capable of transferring the radiation feeding each heating bell 103 from a fixed static laser source to the respective heating bell 103. The optical collector transfers the radiation of the optical fibers coming from a laser source to the corresponding optical fibers 113, which feed the heating bells 101.

The optical collector may be connected to a plurality of laser sources. Alternatively, an optical collector may be provided which receives the radiation from a single laser source and distributes it to the different heating bells 103.

A variant provides arranging a laser source for each heating bell 103 by placing such laser sources directly on the heating devices 101, which allows the use of an optical collector to be avoided.

A further variant provides for each individual laser source, which feeds a single heating bell 103, in turn to consist of an assembly of various emitters (optical resonators), each generating radiation with its own wavelength independent of the other resonators. Each single monochromatic radiation is then conveyed in a single carrier optical path (generally a carrier optical fiber) on which the beams of the different radiations are transported which, having a different wavelength, do not generate destructive interferences with the other beams travelling along the same fiber. This grouping of different beams in a single final optical beam may serve both to achieve increased overall optical power and to avoid having a highly polarized radiation, should the selection of the optical solution implemented in the heating bells not allow the use of polarized radiation because here, there would in any case be a distribution of the radiation according to a cylindrical geometry, but nonetheless not uniform.

The expression "laser source" in the present description of the invention indifferently means:

a) a laser source formed by a single optical resonator, or single active material, or single emitter;

b) a laser source formed by an assembly of optical resonators, each with a monochromatic radiation having independent wavelength from the others, which are synchronized in the operation and are capable of converging the various radiations over a single optical path directed at a single heating bell 103. It is possible for the formed beam not to be monochromatic, rather it is formed by radiations having various wavelengths (slightly dissimilar from one another to remain in the range of optimal values), each with its own optical propagation method and not interfering with the others by virtue of the different wavelength.

In particularly preferred embodiments, the electromagnetic radiation emitted by the laser device or the assembly of the single wavelengths of the beam emitted are within the following wavelength ranges:

- 1620-2100 nm, preferably 1652-1674 nm and/or
- 1701-1880 nm and/or
- 1907-1919 nm and/or
- 1951-2000 nm and/or
- 1803-1813 nm and/or
- 1903-1913 nm and/or
- 1941-1961 nm and/or 1972-2012 nm.

Even more preferably, the electromagnetic radiation has a wavelength of 1661 nm and/or 1721 nm and/or 1908 nm and/or 1951 nm and/or 1992 nm, the wavelength of about 1940-1955 nm being the most preferred.

It is also possible to use the optical heating path to convey UV-C radiation from LED or laser devices to sterilize the preforms, as described in Italian Patent Application No. 102019000009591 filed on June 20, 2019 by the same Applicant.

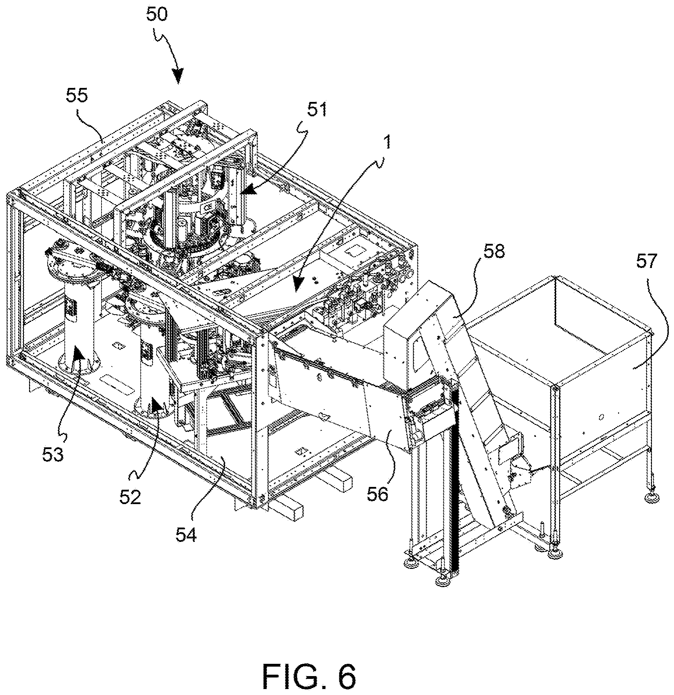

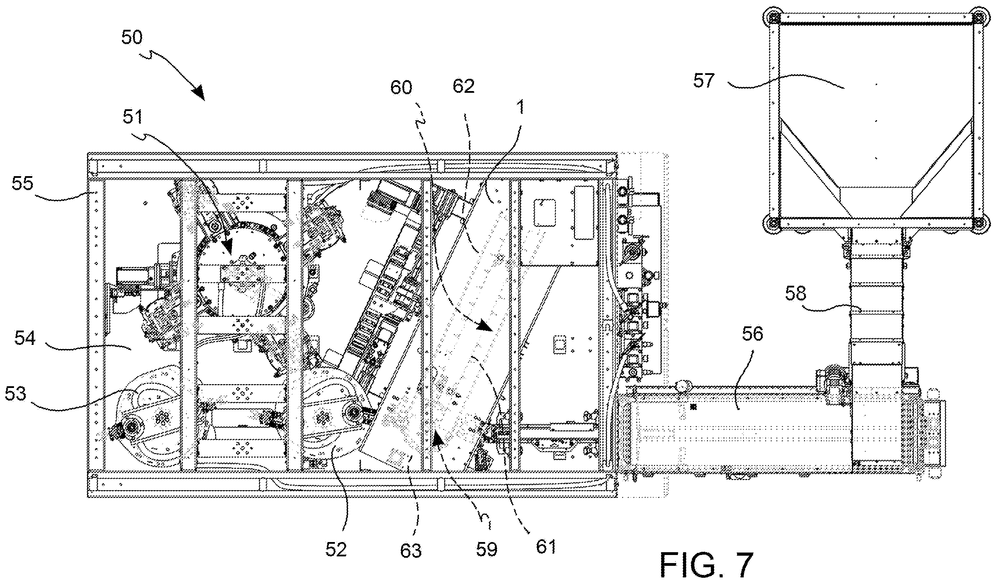

In a different embodiment, shown in Figures 6-11, the heating apparatus 1 is comprised in a compact blowing/stretch-blowing machine 50, which also comprises a blowing/stretch-blowing carousel 51, a first transfer star 52 for the heated preforms arranged between the heating apparatus 1 and the blowing/stretch-blowing carousel 51 and a second transfer star 53 for removing the blown/stretch-blown bottles from carousel 51.

Machine 50 comprises a base 54, on which there are placed apparatus 1, carousel 51 and the stars 52, 53, and framework 55 which encloses all the aforesaid operating units and which may be configured so as to mount clear containment panels adapted to circumscribe the working environment in a sterile atmosphere.

Machine 50 is coupled with a loading system 56 of the preforms, which places the preforms in vertical position and feeds them to the heating apparatus 1 to which it is connected. The loading system 56 in turn takes the preforms from a loading hopper 57 by means of a lifting device 58. The assembly formed by hopper 57, lifting device 58 and orienting device 56 is of the known type and is positioned outside the framework 55 of machine 50.

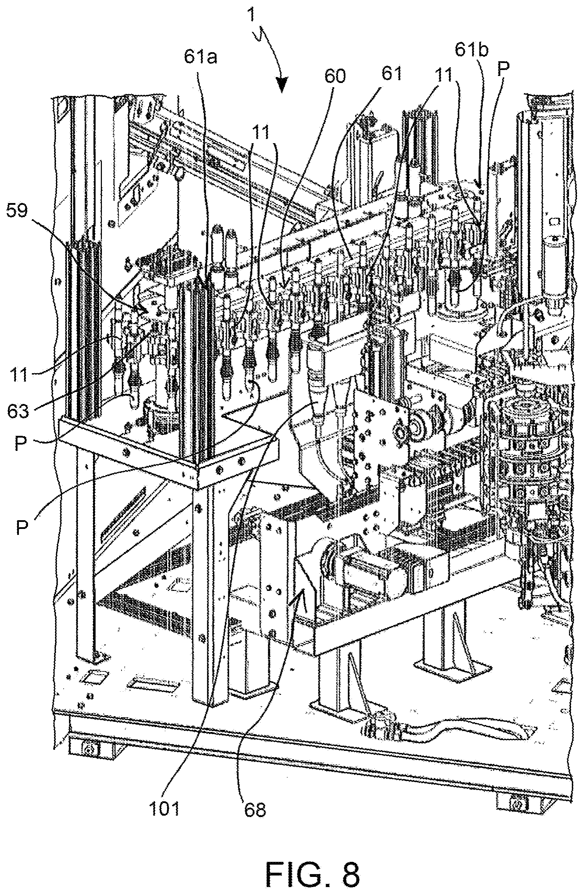

The heating apparatus 1 of the preforms is shown in Figures 8-11. It comprises transport means 59 adapted to continuously move a plurality of spindles 11 adapted to transport the preforms P along a path comprising a first rectilinear stretch 61, corresponding to a processing line 60 of the preforms P, a second rectilinear stretch 62 opposing and parallel to the first rectilinear stretch 61, and respective curvilinear stretches 63 at the transport means 59. The spindles 11 move integrally with a chain, as described above, and the engagement and disengagement actuation thereof with the preforms P occurs by means of cams, according to conventional methods known to those skilled in the art.

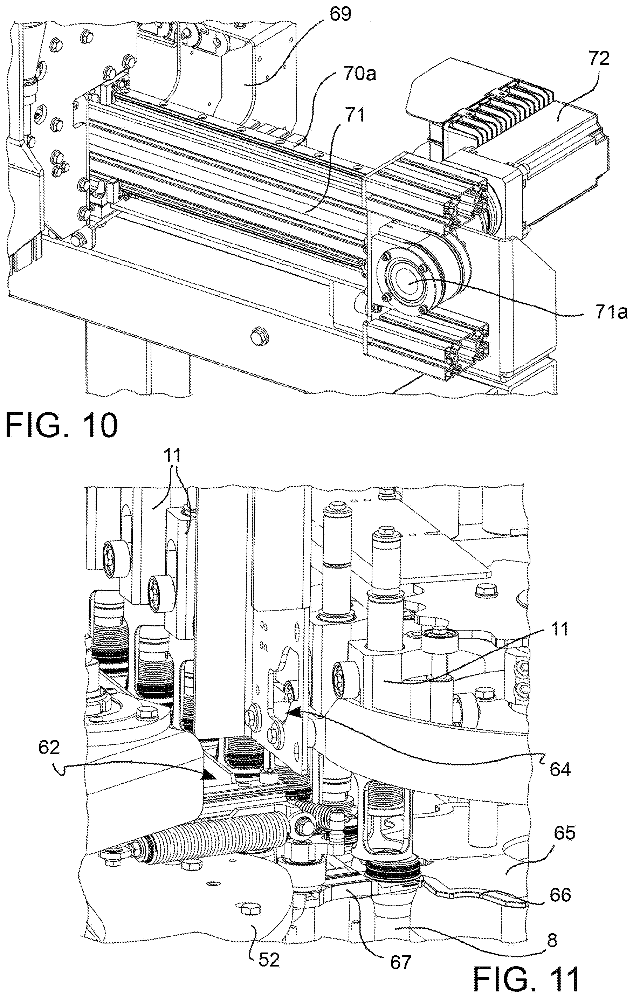

The transfer of the heated preforms P to the first transfer star 52 is shown in Figure 11. Once they reach the end of the rectilinear stretch 62, the spindles 11 interact with cam 64 so as to disengage the preform. The latter is accompanied in the transfer movement from a driving plate 65 comprising a plurality of recesses 66 along the perimeter thereof, up to when gripper 67 of the transfer star 52 receives the preform and brings it to the blowing/stretch-blowing machine 51 downstream.

The heating apparatus 1 comprises, at the first rectilinear stretch 61, a movement system 68 of the heating devices 101.

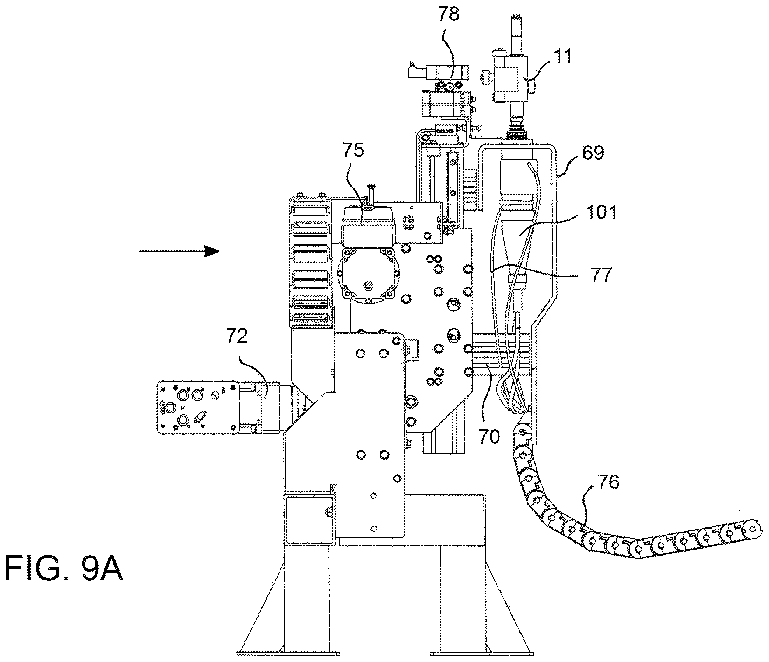

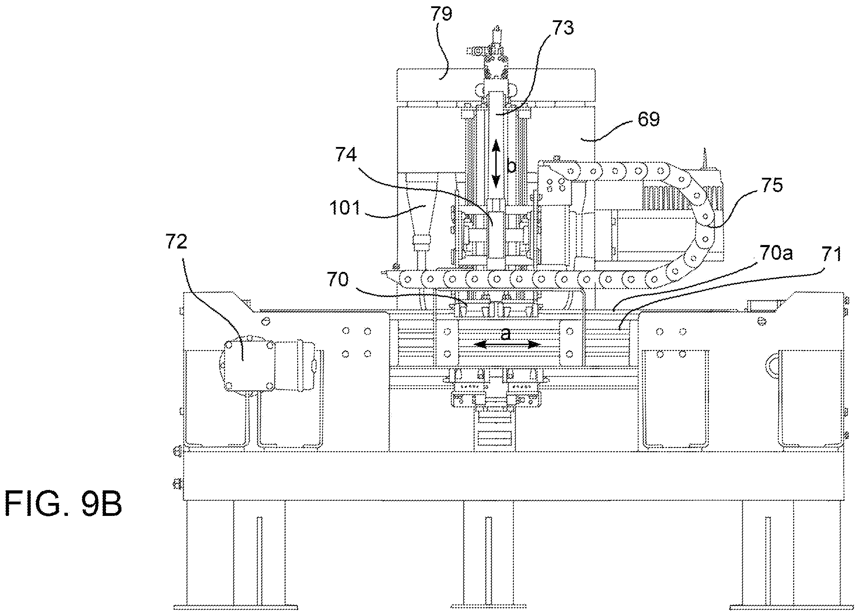

The movement system 68 comprises a support frame 69 for a plurality of heating devices 101 which are arranged with the same pitch as the spindles 11 and are fewer in number than the spindles 11 transiting on the first rectilinear stretch, between the input point 61a and the output point 61b. The support frame 69 is placed on a slide 70 which is integral with a horizontal belt 71 and slidable on a guide 70a. Belt 71 is moved, by means of suitable pulley 71a, by a first drive system 72 so as to slide in horizontal direction in both directions indicated by the double arrow a in Figure 9B.

The support frame 69 is further integral with a vertical belt 73 moved, by means of pulley 74, by a second drive system 75, so as to slide in vertical direction in both directions indicated by the double arrow b in Figure 9B.

The support frame 69 may comprise side openings adapted to allow the dissipation of heat by natural convection given also by the movement of the group of heating devices during the preform tracking.

The first drive system 72 is configured to impart, to frame 69, and therefore to the heating devices 101, a horizontal movement according to a first law of motion, that is a homokinetic movement with respect to the movement of the spindles 11 carrying the preforms P in the advancement direction of the spindles 11, and an accelerated movement in the opposite direction. The second drive system 75 is configured to impart, to frame 69, and therefore to the heating devices 101, a vertical upwards and downwards movement according to a second law of motion, so that during the travel of the spindles 11 along the first rectilinear stretch 61, the heating devices 101 travel a complete upwards and downwards path between a lowered disengaged position with the preforms P and a raised position in which the preforms P are inserted in the heating devices 101, as described above in relation to the first embodiment.

To ensure that the support frame 69 supporting the heating devices 101 returns to the same initial position at the input point 61a of the preforms once the heating of the corresponding number n of preforms P is complete, heating said n preforms is to be completed in a time in which a number m of new spindles 11 is positioned along the first rectilinear stretch 61, in which the total number of spindles 11 between the input point 61a and the output point 61b is given by n + m and m < n. Thereby, the time employed by the support frame 69 to return to the initial position corresponds to the time in which the remaining n - m spindles 11 carrying the preforms P still to be to be treated are loaded.

Tr being defined as the heating time for the n preforms which are simultaneously heated by the heating devices 101 placed on frame 69, Ts being defined as the repositioning time of frame 69 from the output point 61b up to the input point 61a and m the number of spindles 11 (therefore of preforms) which reach the rectilinear stretch 61 over time Tr, and finally t being defined as the loading time of a spindle 11, that is the transit time to the input point 61a between one spindle and the successive one, it is necessary for the following relations to be true:

$$Tr \leq mt$$

and

$$Ts \leq (n - m)t.$$

A laser heating system may have shorter heating times Tr than the equivalent time for the blowing cycle of n preforms and the blowing cycle time for each preform is to be equal to t for the continuity of the motion of the machine. Moreover, due to the fact that the heating time Tr is mainly a function of the power of the laser source selected, and therefore time Tr is an independent variable as is t, time given by the selected productivity of the machine, and n, that is the number of heating devices 101 which is a design choice, it therefore is possible to satisfy the two above relations simultaneously having three variables (Tr, t and n) which are independent, and therefore selectable by the manufacturer.

In certain embodiments, the belts 71, 73 may be replaced by a rack/gear system, or by a linear drive (linear electronic motors or rotary electronic motors with a screw drive).

The optical fibers transporting the electromagnetic radiation from the sources located in the vicinity of the machine, for example onboard the machine, are coupled to the heating devices 101 by a convenient coupling, as is common in fiber laser systems, and collected by a flexible cable-support chain 76 which follows the movement of the heating system and ensures there are no curves with radius less than the acceptable one for the fiber selected. This cable-support chain 76 also houses the high pressure air ducts which activate the pneumatic systems and feed the pipes 77 for the airflow for cleaning the optical devices, as described in relation to the embodiment in Figures 20-21.

The upper part of the heating devices 101 may be closed, during the activity interruption steps, by a plate 79 (Figure 9B) by means of a pneumatic actuator 78 which is activated when suitable.

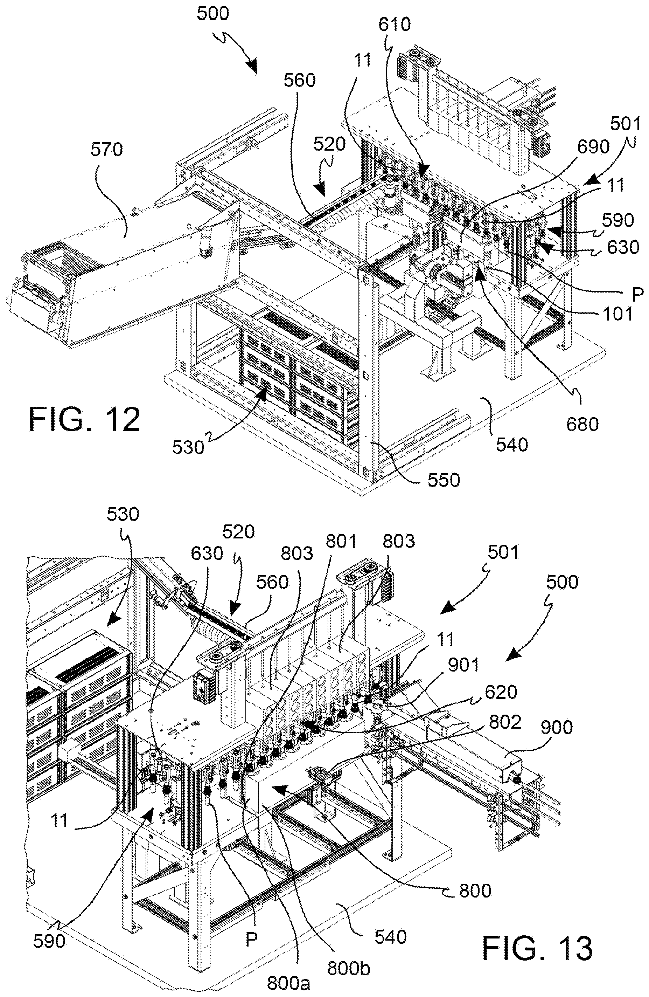

With reference to Figures 12-17, a different embodiment of the compact blowing/stretch-blowing machine of the invention is now described.

Machine 500 is of the discontinuous type and integrates the blowing/stretch-blowing unit in the same heating apparatus 501, as described below. In addition to the overall simplicity of the machine, the benefit of this system lies in taking advantage of the very tight times of the heating and blowing cycle which may coincide, unlike conventional systems whereby the blowing cycle is about 1.5-2 s, while heating times with lamps are about ten times as long. Thereby, the sum of the unloading and loading cycle times becomes decisive in machine productivity, allowing the present invention to have very short heating times.

Machine 500 comprises a base 540, on which there are placed apparatus 501, a loading system 520 of the preforms, a service unit 530 comprising the laser sources, and framework 550 which encloses all the aforesaid operating units and which may be configured so as to mount clear containment panels adapted to circumscribe the working environment possibly in a sterile atmosphere.

The loading system 520 of the preforms is coupled to a loading and orientation hopper 570 external to framework 550, which allows sending the preforms, conveniently oriented by means of a dual rotating cylinder system, by gravity towards the loading system 520.

The loading system 520 comprises an auger member 560 and a transfer star 580 comprising a plurality of recesses 581 along the periphery thereof.

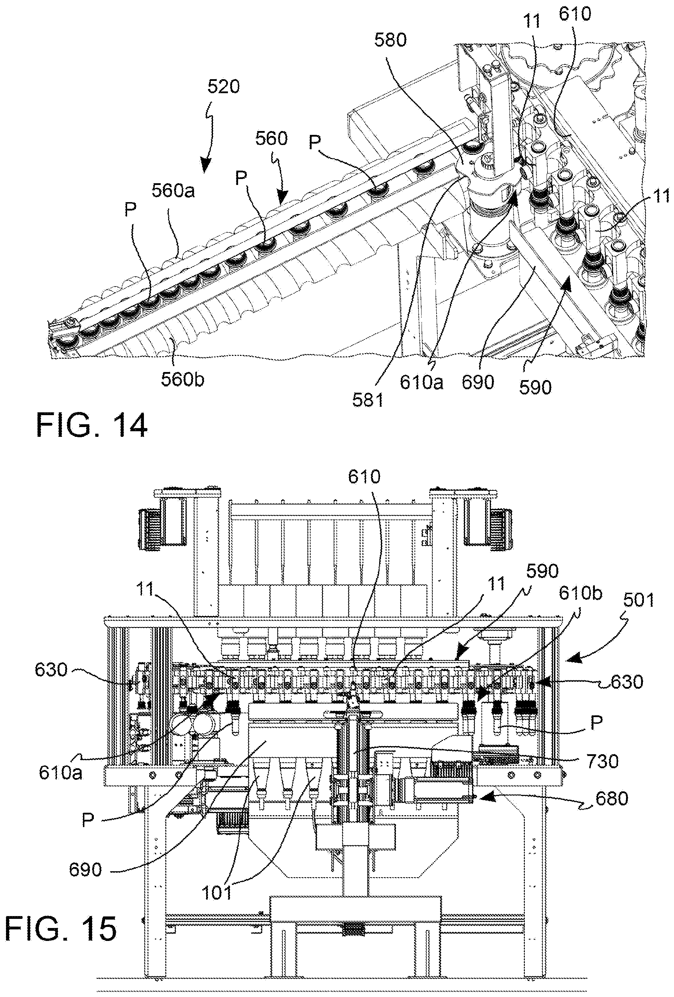

In the example shown in the drawings (Figure 14 in particular), the auger member 560 consists of two parallel and rotating augers 560a, 560b, between which the already oriented preforms P are transported. However, in a different embodiment (not shown), the two augers 560a, 560b may be replaced by a single auger coupled to a guide profile so that the single auger serves as movement means and the guide profile as guide and support for the preforms, for example which are carried at the level of the neck finish.

The two augers 560a, 560b or the single auger have a varying pitch helical groove configured so that the pitch at the coupling point to the loading and orientation hopper 570 substantially corresponds to the diameter of the preforms, while the pitch at the transfer star 580 corresponds to the one of the recesses 581 of star 580, which in turn corresponds to the pitch of the spindles 11 downstream.

The heating apparatus 501 comprises transport means 590 configured to discontinuously and intermittently move a plurality of spindles 11 adapted to transport the preforms P along a path comprising a first rectilinear stretch 610, corresponding to a heating line of the preforms P, a second rectilinear stretch 620 opposing and parallel to the first rectilinear stretch 610, and respective curvilinear stretches 630 at the transport means 590. The spindles 11 move integrally with a chain, as described above, and the engagement and disengagement actuation thereof with the preforms P occurs by means of cams, according to conventional methods known to those skilled in the art.

A transfer star 901 coupled to a conveyor 900, external to framework 550, for collecting and removing the blown containers from machine 500 is placed at the curvilinear stretch 630 placed downstream of the second rectilinear stretch 620.

In this embodiment, the transport means 590 comprise a number n of spindles 11 at the first rectilinear stretch 610 and an equal number n of spindles 11 both at the second rectilinear stretch 620 and in the two curvilinear stretches 630. Thus, in total, the spindles 11 on the transport means 590 are 4n in number, in which n is determined by the dimensions of the system and accordingly, by the required productivity.

The heating apparatus 501 comprises, at the first rectilinear stretch 610, a movement system 680 of the heating devices 101 and, at the second rectilinear stretch 620, corresponding to a blowing/stretch-blowing line of the preforms, a system of movable half-molds 800.

The movement system 680 comprises a support frame 690 for a plurality of heating devices 101 which are arranged with the same pitch as the spindles 11 and are equal in number to the spindles 11 transiting on the first rectilinear stretch 610, between the input point 610a and the output point 610b. In the example shown in the drawings, eight spindles 11 on the first rectilinear stretch 610a correspond to eight heating devices 101 on frame 690. However, it is apparent that the number of heating devices 101 and spindles 11 on the first rectilinear stretch 610a will be determined by the dimensions of the machine, and therefore the productivity required by the system.

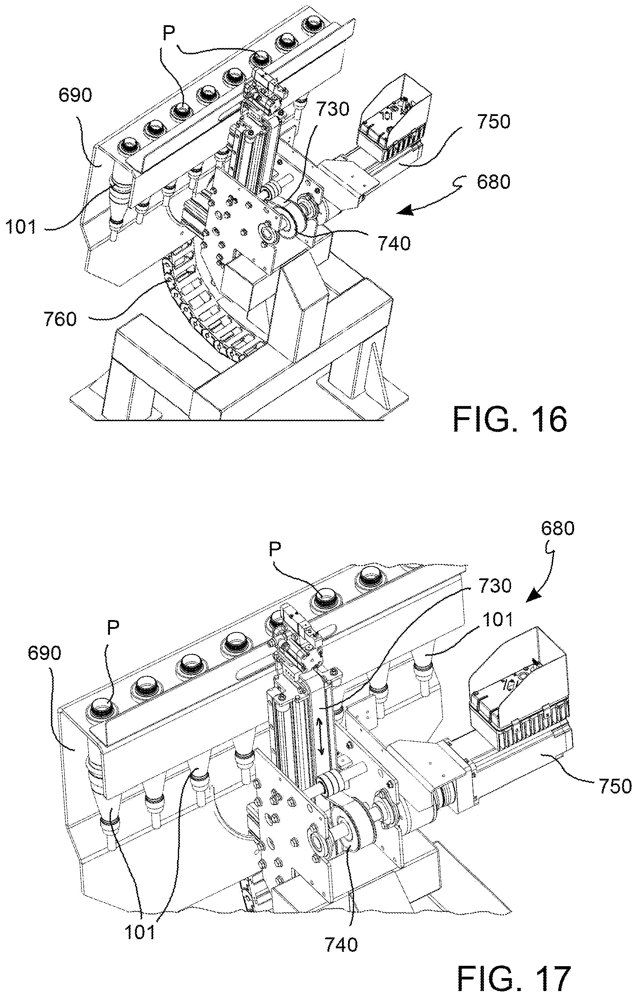

The support frame 690 is integral with a vertical belt 730 moved, by means of pulley 740, by a drive system 750, so as to slide in vertical direction in both directions indicated by the double arrow b in Figure 17.

The support frame 690 may comprise side openings adapted to allow the dissipation of heat by natural convection given also by the movement of the group of heating devices during the sliding along the preforms.

The drive system 750 is configured to impart, to frame 690, and therefore to the heating devices 101, a vertical upwards and downwards movement according to a law of motion, so that the heating devices 101 travel a complete upwards and downwards path between a lowered disengaged position with the preforms P and a raised position in which the preforms P are inserted in the heating devices 101, as described above in relation to the first embodiment.

In certain embodiments, belt 730 may be replaced by a rack/gear system, or by a linear drive (linear electronic motors or rotary electronic motors with a screw drive).

The optical fibers transporting the electromagnetic radiation from the laser sources are coupled to the heating devices 101 by a convenient coupling, as is common in fiber laser systems, and collected by a flexible cable-support chain 760 which follows the movement of the heating system and ensures there are no curves with radius less than the acceptable one for the fiber selected. This cable-support chain 760 also houses the high pressure air ducts which activate the pneumatic systems and feed any pipes for the airflow for cleaning the optical devices, as described in relation to the embodiment in Figures 20-21.

As mentioned, there is a system of movable half-molds 800 at the second rectilinear stretch 620. The system of movable half-molds 800 is of the conventional type in linear machines and comprises first and second opposing half-molds 800a, 800b located at the preforms P, on opposite sides of the second rectilinear stretch 620. The number of the pairs half-molds 800a, 800b is equal to the number n of spindles 11 which are placed on the second rectilinear stretch 620.

The half-molds 800a, 800b are movable towards one another, between an open position and a closed position to form a mold, along a track 801 by actuators 802. The half-molds 800a, 800b enclose therein an impression of the container to be produced and they are coupled to pneumatic blowing or stretch-blowing systems 803 configured so as to insufflate pressurized air through the preform neck when the same is inserted in the half-molds 800a, 800b and they are closed.

As mentioned, the heating apparatus 501 discontinuously and intermittently operates and comprises the following operating steps:

i) loading step, in which a number n of preforms P is gripped by just as many spindles 11 at the input point 610a and is brought above the n heating devices 101;

ii) heating step, in which the transport means 590 are stationary, while the support frame 690 of the heating devices 101 performs an upwards and downwards movement so that the preforms P are inserted into the heating devices 101 and then are caused to exit, and in which the laser sources are activated during this step so as to heat the preforms, as described above;

iii) stationary step, in which the transport means 590 transport the n heated preforms P at the curvilinear stretch 630 immediately downstream and then stop, so that the heated preforms may obtain the homogeneous redistribution of the heat prior to being introduced into the molds;

iv) blowing step, in which the transport means 590 transport the preforms P from the curvilinear stationary stretch 630 to the second rectilinear stretch 620 and then stop, and in which the half-molds 800a, 800b close and the pressurized air is blown into the neck of the preforms to form the containers;

v) unloading step, in which the transport means 590 bring the formed containers to the curvilinear stretch 630 immediately downstream, in which the containers are removed from machine 500 by conveyor 900.

It should be noted that at full speed, when n preforms are in the loading step i), other n preforms downstream are in the heating step ii), other $n$ preforms are in the stationary step iii), further $n$ preforms are in the blowing/stretch-blowing step iv), and $n$ containers are removed in the unloading step v), so that the machine intermittently operates by simultaneously performing the different prepared operating steps.

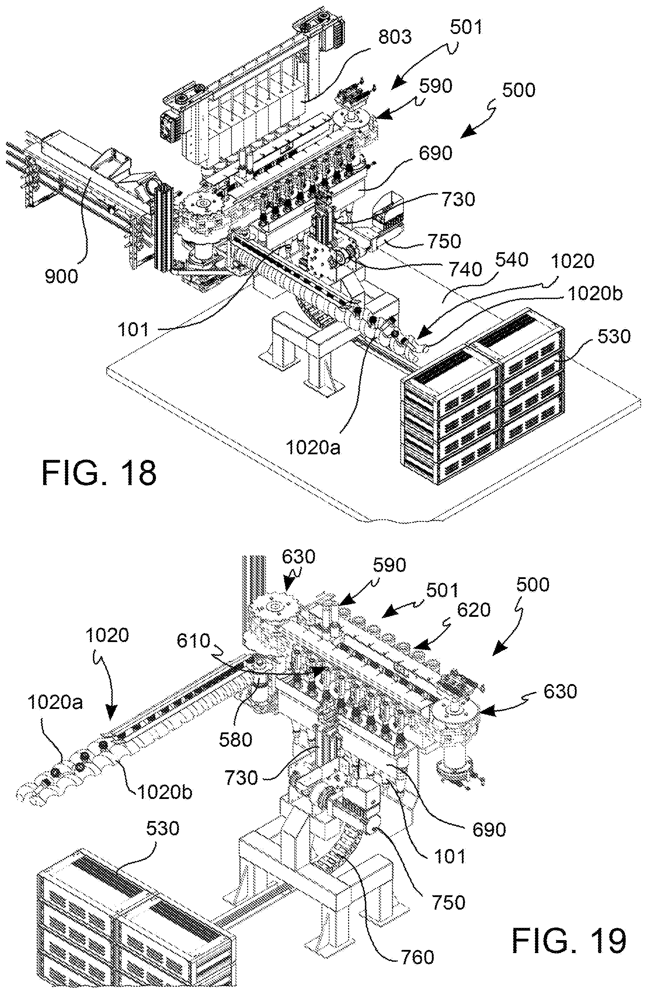

Figures 18-19 show a variant of the embodiment of the compact blowing/stretch-blowing machine 500 according to the invention. Machine 500 is only partly shown so as to note the differences with respect to the embodiment in Figures 12-17.

The heating apparatus 501 is similar to the one described for the embodiment in Figures 12-17, except for the fact that there are only n spindles 11 at the first rectilinear stretch 610 and n spindles 11 at the second rectilinear stretch 620 on the transport means 590, that is there are no spindles 11 at the curvilinear stretches 630. The total number of spindles 11 on the transport means 590 will therefore be equal to 2n.

Another difference consists in the fact that the loading and orientation hopper 570 of the preforms in the preform loading system is replaced by a regular hopper (not shown), while the orientation of the preforms is performed by an auger member 1020, as described below.

The auger member 1020 comprises two augers 1020a, 1020b placed side-by-side and rotatable, between which the preforms P are transported.

The two augers 1020a, 1020b have:

- a varying diameter between a first stretch with smaller diameter, so as to create a greater opening between the two facing augers, and a second stretch with larger diameter;
- a varying helical pitch and a varying depth recess such as to allow the almost vertical positioning of the preforms in a first stretch and the completely vertical positioning of the preforms P and the progressive reaching of the pitch of the recesses 581 of the input star 580 in a second stretch, in which said recess has a size which is close to the outer diameter of the preforms.

Such a pitch in turn corresponds to the pitch of the spindles 11 downstream. Moreover, the helical groove is shaped so as to promote the orientation of the preforms with the neck upwards, as shown in Figure 19.

It is apparent that this embodiment of the auger member 1020 may also be used in the machine in Figures 12-17, as the loading system 520 in Figures 12-17 may be applied to the embodiment in Figures 18-19.

Also the heating apparatus 501 according to the variant in Figures 18-19 operates discontinuously and intermittently and comprises the following operating steps:

i) loading step, in which a number $n$ of preforms P is gripped by just as many spindles 11 at the input point 610a and is brought above the $n$ heating devices 101;

ii) heating step, in which the transport means 590 are stationary, while the support frame 690 of the heating devices 101 performs an upwards and downwards movement so that the preforms P are inserted into the heating devices 101 and then are caused to exit, and in which the laser sources are activated during this step so as to heat the preforms, as described above;

iii) blowing/stretch-blowing step, in which the transport means 590 transport the *n* heated preforms P at the second rectilinear stretch 620 and then stop, and in which the half-molds 800a, 800b close and the pressurized air is blown into the neck of the preforms to form the containers;

iv) unloading step, in which the transport means 590 bring the formed containers to the curvilinear stretch 630 immediately downstream, in which the containers are removed from machine 500 by conveyor 900.

It should be noted that at full speed, during the movement of the spindles to bring the preforms from a ii) heating step to the iii) blowing step, n preforms are loaded and just as many preforms are unloaded at the same time. Instead, during the stationary steps, *n* preforms are in the ii) heating step, while other *n* preforms are in the iii) blowing/stretch-blowing step, so that the machine intermittently operates while simultaneously performing the different prepared operating steps. Therefore, the stationary step of the heated preforms pending blowing is eliminated.

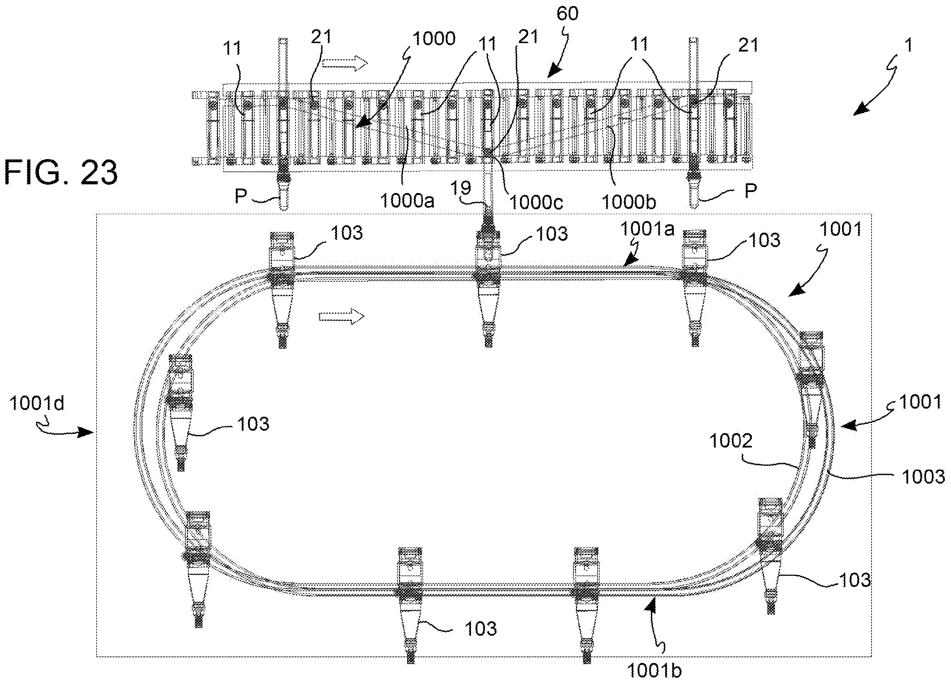

Figures 23-30 show a further embodiment of the invention.

The movement system of the preforms in such an embodiment is of the continuous type. The spindles 11, of the type similar to the ones described above, are movable, by means of a chain or other transport means, along the processing line 60 (according to the arrow in Figure 23), similarly to what is described for the embodiment in Figure 8, but they are configured so as to have a greater vertical path than the one required for gripping or releasing the preforms P.

A cam 1000 is placed along the processing line 60, which cam interacts with roller 21 associated with the gripper finger 19 to lower or raise preform P according to a predefined law of motion resulting from the combination of the horizontal movement along the processing line 60 and the vertical movement of the gripper finger 19 dictated by the shape of cam 1000.

In particular, cam 1000 comprises a descending stretch 1000a, an ascending stretch 1000b, and a minimum point 1000c placed in median position.

The heating bells 103, which are entirely similar to those described above, are movable along a circuit 1001 according to the direction of the arrow in Figure 23, with a homokinetic law of motion with respect to the sliding speed of the spindles 11 along the processing line 60.

In the embodiment in Figure 23, the circuit 1001 comprises two opposing rectilinear stretches 1001a, 1001b and two opposing arc of circle stretches 1001c, 1001d, in which a first rectilinear stretch 1001a is alongside the processing line 60.

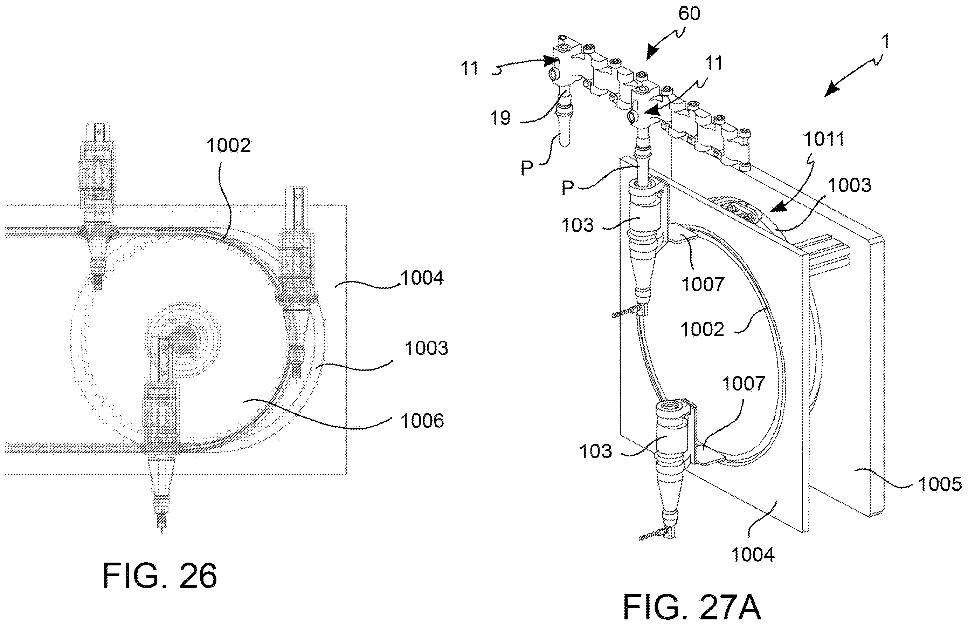

Circuit 1001 is formed by a first and a second parallel chain 1002, 1003 placed on respective panels 1004, 1005 (Figure 26 shows the path of the front drag chain with the panel thereof in transparency and the rear panel 1004 in which there is the recess of the rear chain guide) spaced along a horizontal direction. As shown in Figure 26, the chains are put into movement by respective toothed wheels 1006. The panels 1004, 1005 comprise respective tracks which accommodate the chains 1002, 1003 and serve as guides.

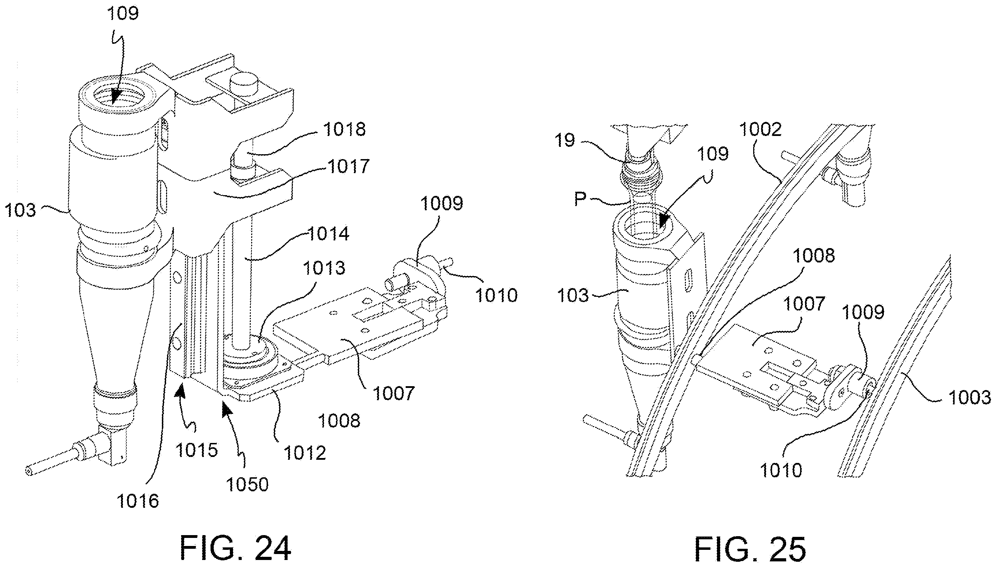

As shown in Figure 25, each heating bell 103 is connected to a driving plate 1007 by means of a first connection pin 1008 passing through the links of the first chain 1002. The driving plate 1007 comprises, at an end opposite to the first connection pin 1008, a tilting member 1009 ending with a second connection pin 1010 which is inserted between the links of the second chain 1003. Thereby, the heating bells 103 move along circuit 1001 while constantly keeping the vertical position with opening 109 facing upwards.

The heating bells 103 move along the processing line 60, on the first rectilinear stretch 1001a, while the preforms are brought into lowered position by virtue of the vertical movement of the gripper finger 19 of the spindles 11 so as to be inserted, with a law of preset motion, into the heating bells 103. As described above, the intensity of radiation IR may be modulated as desired.

In a variant of such an embodiment (shown in Figure 24), the first connection pin 1008 connects the driving plate 1007 with a support element 1050 comprising vertical movement means of the heating bell 103.

The support element 1050 comprises a support plate 1012 connected to the first pin 1008 and on which a rotary actuator 1013 which rotates a threaded bar 1014 is fastened. A vertical guide element 1015 comprising a rail 1016 on which a sliding element 1017 vertically slides is fastened to the supporting plate 1012. The sliding element 1017 is integral with the heating bell 103 and comprises a threaded sleeve 1018 slidingly engaged with the threaded bar 1014 so that a rotation of the latter in one direction or the other corresponds to an upwards or downwards sliding of the heating bell 103.

In this variant, the processing line 60 on which the spindles 11 slide is devoid of cam 1000, whereby the spindles 11 will only have a horizontal movement. Vice versa, the heating bells have a combined horizontal (along the first rectilinear stretch 1001a) and vertical movement, in which the law of motion of the vertical movement is not preset, rather it may be modulated by adjusting the rotary actuator 1013.

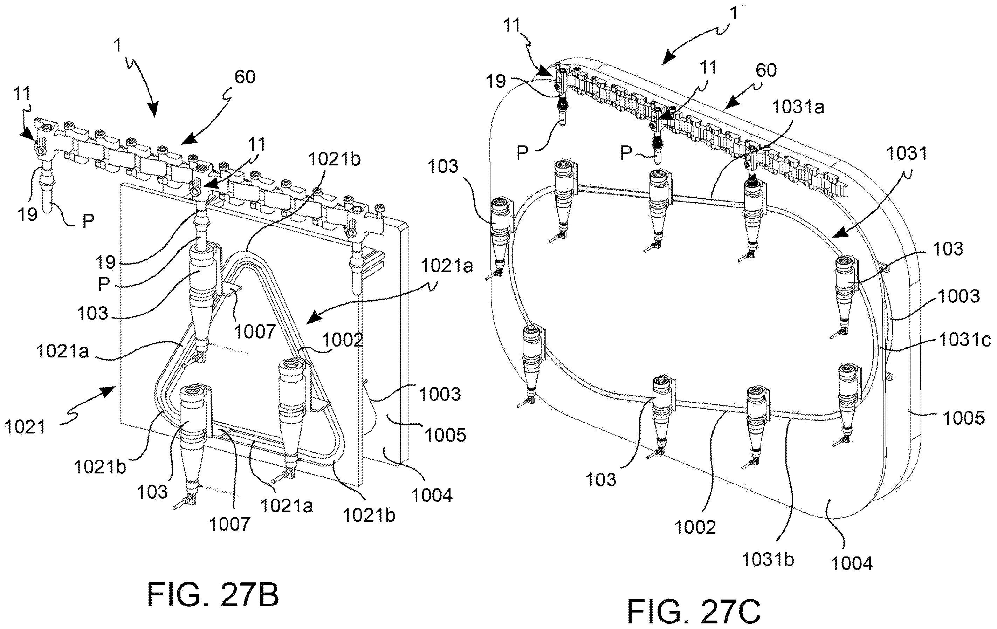

Figures 27A, 27B and 27C illustrate three different variants of the embodiment in Figure 23.

Figure 27A shows a circular-shaped circuit 1011.

Figure 27B shows an equilateral triangular-shaped circuit 1021 with a horizontally placed base. Circuit 1021 comprises three rectilinear stretches 1021a joined by elbow-shaped stretches 1021b.

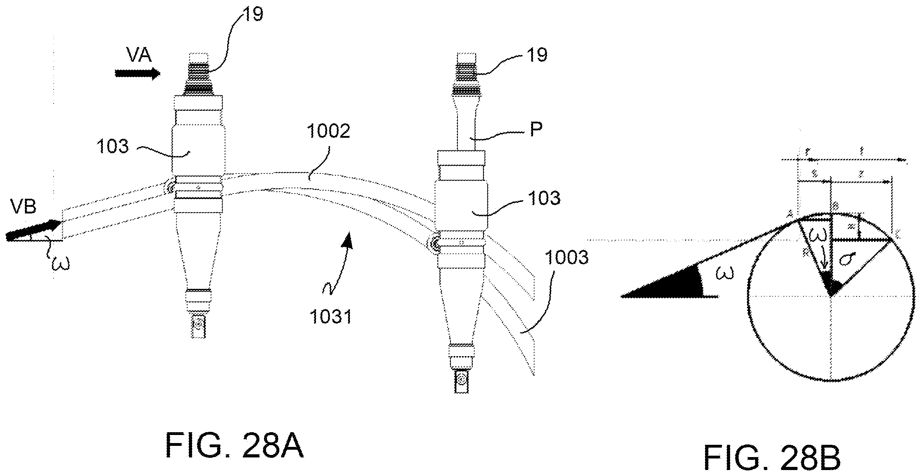

Figure 27C shows a circuit 1031 similar in shape to the one in Figure 23, comprising two opposing rectilinear stretches 1031a, 1031b and two opposing arc of circle stretches 1031c, 1031d, but in which said rectilinear stretches 1031a, 1031b are tilted by an angle w with respect to a horizontal straight line (Figures 28A and 28B).

Such embodiments allow avoiding the vertical movement of the spindles 11 (Figure 23) or of the heating bells 103 (Figure 24) because the relative movement of the preforms P in the heating bells 103 is obtained by means of the movement of the spindles 11 along the processing line 60 and of the heating bells 103 along the circuits 1011, 1021, 1031.

In the case of the circuits 1021, 1031 (Figures 27B and 27C), it is necessary for the movement speed of the spindles 11 along direction VA in Figure 28A and the sliding speed of the heating bells 103 along direction VB to be constant and of suitable value to ensure a homokinetic or almost-homokinetic motion along the horizontal motion component in the steps in which preform P is immersed in the heating bell 103.

In particular, when the heating bell 103 passes along the upper vertex 1021b of the triangle in Figure 27B, or the highest point of circuit 1031 in Figure 27C, as detailed in Figure 28B, the horizontal component of the heating bell 103 is different from the horizontal component of spindle 11 transporting preform P, whereby there is an *almost-homokinetic* motion in this case.

With reference to the geometrical construction shown in Figure 28B, the aforesaid difference in movement along the horizontal between spindle 11 and heating bell 103 corresponds to the difference between the segments (r+t) and (s+z).

In order to avoid interference between preform and inner surfaces of the heating bell 103, there is a need to provide for dimensional tolerances and design choices such that value Q, corresponding to the distance between the wall of preform P and the inner surface of the heating bell 103 (see Figure 20), is greater than the value given by the following relation (1):

$$Q > |\Delta 2 - \Delta 1| \qquad\qquad (1)$$

where $\Delta 1$ is the difference between the movement s projected onto the horizontal abscissa of the heating bell 103 and the movement *r* of spindle 11 carrying preform P, as shown in Figure 28B, during which time the heating bell 103 travels a path which is no longer rectilinear and no longer tilted by angle $\omega$, rather curved, is placed between points A and B in Figure 28B. Therefore, in the stretch A-B, the heating bell 103 advances more quickly (by a section "s", Fig. 28B) with respect to the advancement of spindle 11 (which advances by a distance "r", Fig. 28B) according to the relation (2):

$$\Delta 1 = s - r = R|\sin\omega - \omega\cos\omega| \quad (2)$$

Angle $\omega$, expressed in radians, is the design tilt angle of the upwards movement of the heating bells 103, R is the radius of curvature of the stretch of path being examined.

The situation is the opposite in the successive stretch B-C, in which preform P travels a greater stretch with respect to the horizontal projection of the movement of the illuminator, and such a deviation is given by $\Delta 2$ according to the following relation (3) :

$$\Delta 2 = t - z = R|\sigma\cos\omega - \sin\sigma|$$

$$(3)$$

where angle $\sigma$ is given by the following relation (4) where H (see Figure 20) is the length of the part of preform P which is to be heated:

$$\sigma = Arcos[(R-H)/R] \qquad\qquad (4)$$

Angle $\sigma$ depends on the design choice of the radius of curvature R and on length H of the heating part of the preform.

The heating system by radiation originating from the reflective surfaces 112a, 112b, 112c, 112d, 112e (Figure 22) does not suffer in terms of the efficiency of the value of A, therefore this value may be selected conveniently high to meet the relation (1).

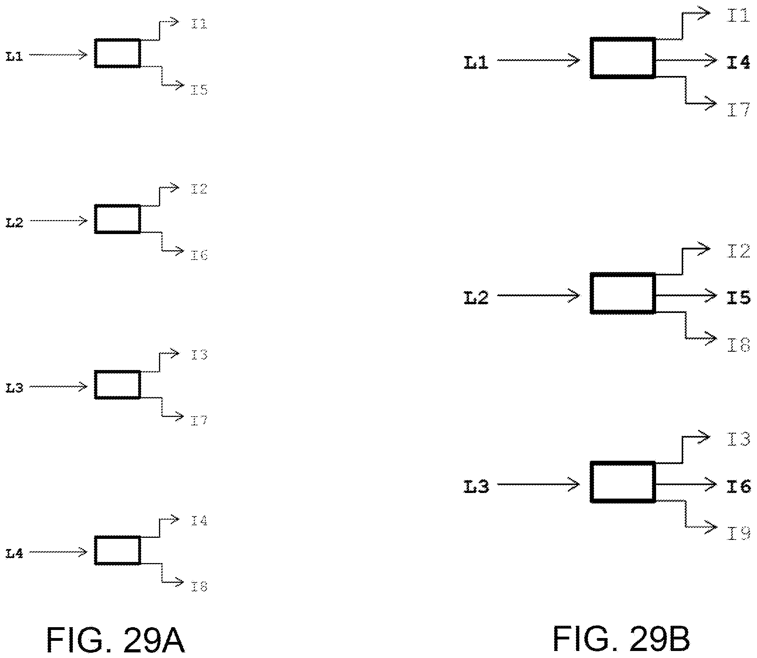

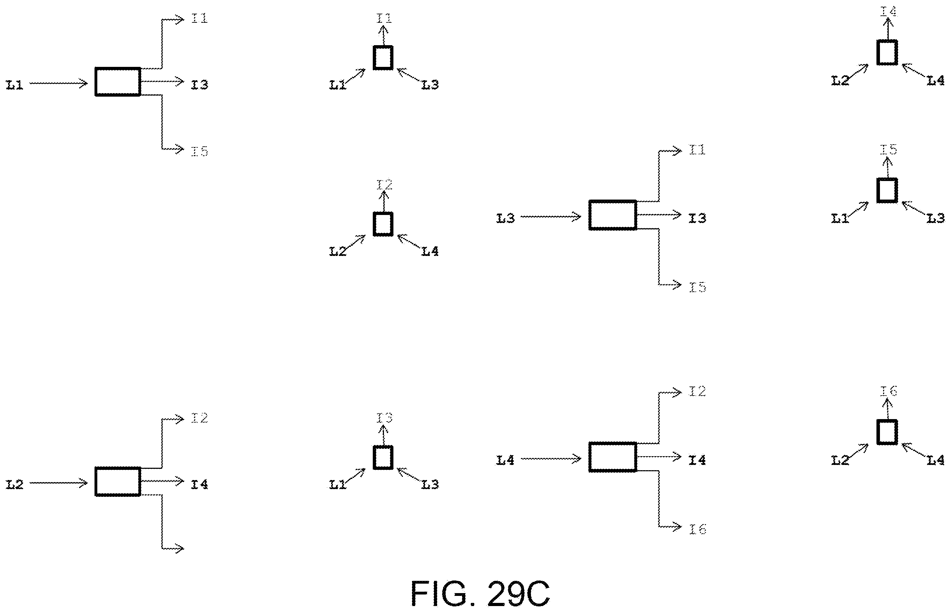

In the geometries of the circuits 1001, 1011, 1021, 1031 shown in Figures 23, 27A, 27B and 27C, respectively, the number of heating bells 103 in active step with respect to the total number of heating bells 103 is one third for circuit 1001 and 1031, half for circuit 1011 and two thirds for circuit 1021. Here, it is possible to decrease the number of laser units with respect to the number of heating bells 103, causing the number of laser units to coincide with the number of active heating bells 103 in each cycle and using a correct sequence of optical switches to deflect the power of each laser unit only to the heating bell 103 active at that moment according to the diagrams illustrated, for example in Figures 29A, 29B and 29C.

Figure 29A shows the case in which 50% of the heating bells 103 is active. L1, L2, L3 and L4 are the laser sources, I1, I2, I3, I4, I5, I6, I7 and I8 are the heating bells 103 provided.

The element indicated symbolically by a rectangle is a common optical switch adapted to high power and for wavelengths used and known to those skilled in the art, which deflects the radiation originating from the individual laser source towards the heating bell 103 which is active in that step.

If the number of active heating bells 103 and the number of laser units are one third with respect to the heating bells 103 located along path 1001 or 1031, then a connection system between laser unit and heating bells 103 is the same as the previous one, the only difference being the optical switches having three outputs. For example, if there are three laser sources L1, L2, L3 and nine heating bells 103 (I1-I9), the situation is the one shown in Figure 29B.

Instead, in the simplified case of the triangular circuit 1021, in which two of the three heating bells 103 present could be active, there is a need to use the diagram of optical switches shown in Figure 29C, which provides coupling switches with one input and three outputs and connectors with two inputs and one output.

For example, if there are four lasers (L1-L4) and six heating bells 103 (I1-I6), there is a situation in which each laser source has an optical switch which deflects onto three heating bells 103 and each heating bell 103 (for example, I1) has an optical connector which receives two optical fibers, one originating from the three output optical switch of a first laser source and the other originating from the three output optical switch of a second laser source. In the example diagrammatically shown in Figure 29C, the heating bell I1 has a two input optical fiber which receives the optical fiber originating from the three output optical switch of laser L1 and L3, and so for I2 is connected to the switches of L2 and **L4,** and for I3 is connected to the switches of L1 and L3, for I4 is connected to L2 and L4, I5 is connected to L1 and L3, and finally I6 is connected to L2 and L4. Thereby, there will always be four active heating bells, four active laser sources and two heating bells switched off for each instant in the cycle, and each active heating bell will remain connected to the same laser source from the beginning to the end of the heating cycle.

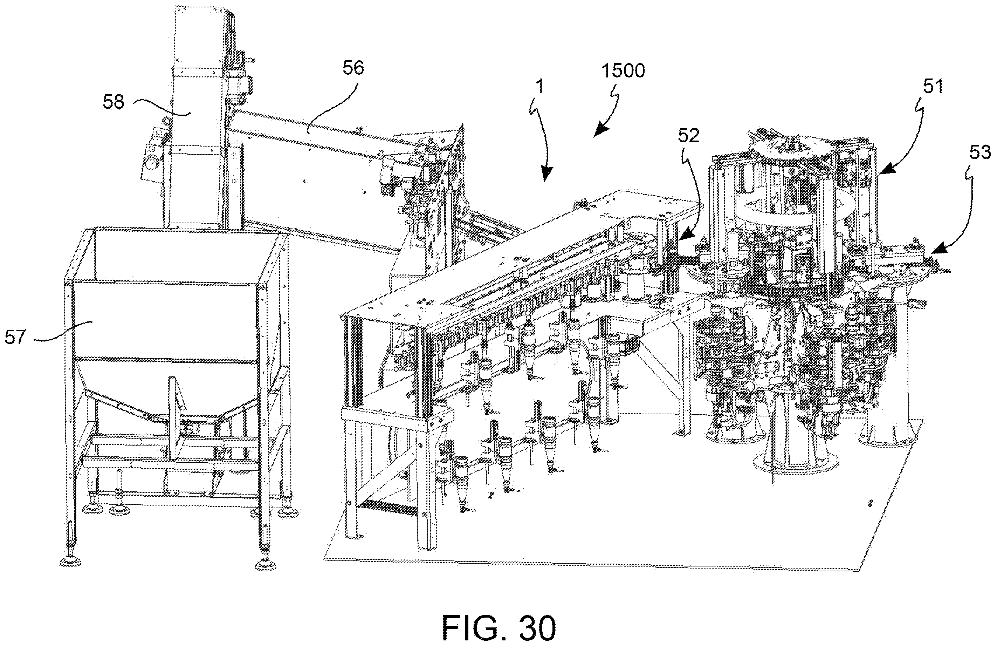

Figure 30 shows a compact blowing/stretch-blowing machine 1500 including the heating apparatus 1 of the embodiment in Figure 23.

Machine 1500 also comprises a blowing/stretch-blowing carousel 51, a first transfer star 52 for the heated preforms arranged between the heating apparatus 1 and the blowing/stretch-blowing carousel 51 and a second transfer star 53 for removing the blown/stretch-blown bottles from carousel 51.

Machine 1500 is coupled with a loading system 56 of the preforms P, which places the preforms in vertical position and feeds them to the heating apparatus 1 to which it is connected. The loading system 56 in turn takes the preforms from a loading hopper 57 by means of a lifting device 58. The assembly formed by hopper 57, lifting device 58 and orienting device 56 is of the known type and is positioned outside the framework 55 of machine 50.

The heating apparatus 1 (of Figure 23) in said compact machine 1500 may be replaced with those shown in relation to Figures 24, 27A, 27B, 27C.

Many advantages can be obtained with the heating system of the invention.

In fact, the heating system of the invention allows obtaining:

- high energy efficiency, limiting heat loss both through the use of absorption wavelengths in predefined bands and through the presence of reflective elements associated with each preform. As shown, the combination of the energy efficiency of infrared laser sources with the employment of suitable wavelengths together with the study of suitable geometries of the reflective surfaces results in a considerably superior overall energy efficiency than the one of conventional heating systems with halogen infrared lamps;

- a maximum accuracy of the heating profile because the heating bells 103 create a series of internal and external reflections studied by virtue of the geometry of the frusto-conical surfaces 112a, 112b, 112c, 112d which leads to the convenient absorption of radiation and, hence, to optimal heating of the material with much higher accuracy than current lamp heating systems. The temperature distribution and the related gradients, by virtue of the phenomenon of heat deposition directly inside the material obtained from the correct penetration of the selected radiation, allow this invention to offer much higher heating quality than that available now. Finally, the band 112e with highly absorbent treatment placed on the metal cylinder absorbs any residual radiation which may escape from the light ring generated between the surfaces 112a, 112b, 112c and, when present, 112d, and thus confines the heat generation to the upper part by following the different shapes of preforms used;

- according to the power of the laser sources employed, a heating time up to and beyond a factor 10 in reducing the heating times with respect to the current systems, which allows a containment of the dimensions of the oven and less subsequent thermal dispersion;

- a broad modulability of the heating, both by varying the intensity of the laser source and by varying the motion of preform P or the heating device 103;
- the possibility of varying the wavelengths generated results in a broad versatility and flexibility of the heating system in order to optimize the heating process according to the variations in PET resin composition or the variations in thickness or to obtain very particular temperature profiles;
- an absence of thermal inertia, which allows an almost instant restart and therefore a better efficiency of the entire production line;
- the possibility of modulating the speed of the machine in the operating step as a function of the trend of the production line, a feature currently not available in the ovens on the market, again by virtue of the absence of thermal inertia and by virtue of the variability of the radiation intensity due to the high dynamic response of the laser sources;
- the possibility of integrating a UV-C radiation source in the same optical path to pair also the disinfection of the preform with the heating;
- a substantial reduction in heat dissipation, with the consequence of saving cooling energy to maintain the working environment of the machine at the correct temperature and to avoid very hot surfaces, which are thus potentially dangerous for operators. This is by virtue of the fact that conventional halogen lamps have operating temperatures of hundreds of degrees, while it is not provided to exceed 80°C in this solution with laser source and cylindrical reflectors;
- an absence of ionizing radiation (unless coupled with a UV-C radiation source), as the laser source is exclusively in the infrared range, which prevents the formation of harmful substances inside the plastic of the preform.

**Claims**

1. A continuous or discontinuous apparatus (1, 501) of the linear type for heating preforms (P), comprising a plurality of heating devices configured so as to be arranged outside the preform and to radiate an electromagnetic radiation in the infrared range generated by one or more monochromatic laser sources the apparatus being **characterized in** forming, in such a heating element, a radiation disk according to a radial symmetry with respect to the center of the preform axis.

2. The apparatus (1, 501) according to claim 1, wherein the apparatus comprises:

   transport means (59) configured so as to continuously move a plurality of spindles (11) adapted to transport the preforms (P) along a path comprising a first rectilinear stretch (61), corresponding to a processing line (60) of the preforms (P), the apparatus (1) comprising, at the first rectilinear stretch (61), a system (68) for moving the heating devices (101) comprising a support frame (69) for a plurality of heating devices (101), the support frame (69) being movable:

      - horizontally according to a first law of motion configured for a homokinetic movement with respect to the movement of the spindles (11) bringing the preforms (P) in the advancement direction of the spindles (11), and for an accelerated movement in the opposite direction, and
      - vertically according to a second law of motion configured so that during the travel of the spindles (11) along the first rectilinear stretch (61), the heating devices (101) travel a complete upwards and downwards path between a lowered disengaged position with the preforms (P) and a raised position wherein the preforms (P) are inserted in the respective heating bells (103);

   or wherein the apparatus comprises:

      transport means (590) configured to discontinuously and intermittently move a plurality of spindles (11) adapted to transport the preforms (P) along a path comprising a first rectilinear stretch (610), corresponding to a heating line of the preforms (P), a second rectilinear stretch (620) opposing and parallel to the first rectilinear stretch (610), and respective curvilinear stretches (630) at the transport means (590),
      wherein the apparatus (501) comprises, at the first rectilinear stretch (610), a movement system (680) of the heating devices (101) and, at the second rectilinear stretch (620), corresponding to a blowing/stretch-blowing line of the preforms, a system of movable half-molds (800a, 800b) positioned at the preforms (P) on opposite sides of the second rectilinear stretch (620), the half-molds (800a, 800b) being movable towards each other, between an open position and a closed position, to form a mold, and being coupled to pneumatic blowing or stretch-blowing systems (803) configured so as to insufflate pressurized air through the preform neck when the same is inserted in the half-molds (800a, 800b) and they are closed, and
      wherein the movement system (680) comprises a support frame (690) for a plurality of heating devices (101)

which are arranged with the same pitch as the spindles (11), the support frame (690) being vertically movable according to a second law of motion configured so that during the travel of the spindles (11) along the first rectilinear stretch (61), the heating devices (101) travel a complete upwards and downwards path between a lowered disengaged position with the preforms (P) and a raised position wherein the preforms (P) are inserted in the respective heating bells (103), and wherein

the heating device (101) comprises a plurality of reflective surfaces (112a, 112b, 112c, 112d), each of said reflective surfaces (112a, 112b, 112c, 112d) being configured so as to singularly radiate a preform (P) from the outside, and wherein

the electromagnetic radiation is generated by a laser source formed by a single optical resonator or single active material or single emitter, or by a laser source formed by an assembly of optical resonators, each with a monochromatic radiation having modular and independent wavelength from the others, which are synchronized in operation and are capable of converging the various radiations over a single optical path and wherein said laser source is obtained by means of one or more laser devices, for example diode source, semiconductor source or fiber source device.

3. The apparatus (1, 501) according to claim 2, wherein the electromagnetic radiation emitted by the laser device is comprised in the wavelength range 1620-2100 nm, and/or 1652-1674 nm and/or 1701-1880 nm and/or 1907-1919 nm and/or 1951-2000 nm, and/or 1803-1813 nm and/or 1903-1913 nm and/or 1940-1955 nm and/or 1941-1961 nm and/or 1972-2012 nm; or the electromagnetic radiation has a wavelength of 1661 nm and/or 1721 nm and/or 1908 nm and/or 1951 nm and/or 1992 nm.

4. The apparatus (1, 501) according to any one of claims 2 to 3, wherein the heating device (101) comprises a heating bell (103) configured to receive a preform (P) therein, wherein said heating bell (103) comprises a substantially cylindrical hollow body (103a), a conical portion (103b) placed at one end of the body (103a), and a reflective portion (103c) placed at the opposite end of the body (103a), and comprises an opening (109), coaxial to the longitudinal axis (X-X) of the heating bell (103), at the reflective portion (103c), and a collimator member (110) at the end of the conical portion (103b), the collimator member (110) being connected to an optical fiber (113) to deliver a collimated beam of infrared radiation with predetermined wavelengths, and wherein, downstream of the optical path of the collimator member (110), the conical portion (103b) of the heating bell (103) comprises a first lens or axicon (111a), placed at the end of said conical portion (103b) connected to the collimator member (110), and a second lens or axicon (111b) placed in the lower section of the cylindrical body (103a), so as to generate a radiation cylinder (R1) with a convenient degree of homogeneity, and wherein

the reflective portion (103c) comprises a system of frusto-conical reflective surfaces (112a, 112b, 112c, 112d) comprising, in sequence from the cylindrical body (103a) towards the opening (109), a first frusto-conical reflective surface (112a) flared outwards, a second frusto-conical reflective surface (112b) converging towards the longitudinal axis (X-X) of the heating bell (103), a third frusto-conical reflective surface (112c) converging towards the longitudinal axis (X-X), and a fourth frusto-conical reflective surface (112d) flared upwards, placed between the first reflective surface (112a) and the second reflective surface (112b), wherein the first, second, third and fourth frusto-conical reflective surfaces (112a, 112b, 112c) are tilted by an angle $\alpha$, an angle $\beta$, an angle $\gamma$ and an angle $\delta$, respectively, with respect to respective cylindrical surfaces which are coaxial to the axis (X-X), wherein angle $\alpha$ is smaller than angle $\beta$ and is greater than or equal to angle $\gamma$ and angle $\delta$, and wherein a substantially cylindrical absorbent surface (112e) is placed between the body (103a) and the first frusto-conical reflective surface (112a).

5. The apparatus (1, 501) according to any one of claims 2 to 4, comprising a laser source for each heating bell (103).

6. The apparatus (1) according to claim 1, comprising a plurality of fixed heating devices (101) and transport means (8) adapted to discontinuously move the preforms (P) along a processing line (12) so that a heating device (101) corresponds to each preform, wherein the transport means (8) comprise a track (9) on which a plurality of spindles (11) adapted to engage said preforms (P) slide, wherein the track (9) is movably associated with a support structure (24) which extends at least in the stretch of the processing line (12), the track (9) being vertically slidable along specific guides (9a) between a lowered position wherein the preforms (P) are inserted in the respective heating bells (103), and a raised position of disengagement of the preforms (P) from the respective heating bells (103).

7. The apparatus (1) according to claim 1, comprising transport means configured so as to continuously move a plurality of spindles (11) adapted to transport the preforms (P) along a processing line (60) of the preforms (P), the apparatus (1) comprising, at the processing line (60), a cam (1000) which interacts with said spindles (11) to lower or raise the preform (P) according to a predefined law of motion resulting from the combination of the horizontal movement along the processing line (60) and the vertical movement of the preform (P) dictated by the shape of the cam (1000), and wherein the heating bells (103) are movable, with a homokinetic law of motion with respect to the sliding speed of the spindles (11), along a circuit (1001) comprising two opposing rectilinear stretches (1001a, 1001b) and two opposing arc of circle stretches (1001c, 1001d), wherein a first rectilinear stretch (1001a) is alongside the processing line (60) .

8. The apparatus (1) according to claim 1, comprising transport means configured so as to continuously move a plurality of spindles (11) adapted to transport the preforms (P) along a processing line (60) of the preforms (P), and wherein the heating bells (103) are movable, with a homokinetic or almost homokinetic law of motion with respect to the sliding speed of the spindles (11), along a circular circuit (1011) or along an equilateral triangular circuit (1021) or along a circuit (1031) comprising two opposing rectilinear stretches (1031a, 1031b) and two opposing arc of circle stretches (1031c, 1031d), wherein said rectilinear stretches (1031a, 1031b) are tilted by an angle ω with respect to a horizontal straight line.

9. The apparatus (1) according to either of claims 7 to 8, wherein the circuit (1001, 1011, 1021, 1031) is formed by a first and a second parallel chain (1002, 1003) placed on respective panels (1004, 1005) spaced along a horizontal direction, the chains (1002, 1003) being put into movement by respective toothed wheels (1006), wherein each heating bell (103) is connected to a driving plate (1007) by means of a first connection pin (1008) passing through the links of the first chain (1002), wherein the driving plate (1007) comprises, at an end opposite to the first connection pin (1008), a tilting member (1009) ending with a second connection pin (1010) which is inserted between the links of the second chain (1003), so that the heating bells (103) move along the circuit (1001) while constantly keeping the vertical position with the opening (109) facing upwards.

10. The apparatus (1) according to claim **1,** comprising transport means configured so as to continuously move a plurality of spindles (11) adapted to transport the preforms (P) along a processing line (60) of the preforms (P),

   and wherein the heating bells (103) are movable, with a homokinetic law of motion with respect to the sliding speed of the spindles (11), along a circuit (1001) comprising two opposing rectilinear stretches (1001a, 1001b) and two opposing arc of circle stretches (1001c, 1001d), wherein a first rectilinear stretch (1001a) is alongside the processing line (60),
   and wherein the circuit (1001) is formed by a first and a second parallel chain (1002, 1003) placed on respective panels (1004, 1005) spaced along a horizontal direction, the chains (1002, 1003) being put into movement by respective toothed wheels (1006), wherein each heating bell (103) is connected to a driving plate (1007) by means of a first connection pin (1008) passing through the links of the first chain (1002), wherein the driving plate (1007) comprises, at an end opposite to the first connection pin (1008), a tilting member (1009) ending with a second connection pin (1010) which is inserted between the links of the second chain (1003), so that the heating bells (103) move along the circuit (1001) while constantly keeping the vertical position with the opening (109) facing upwards,
   and wherein the first connection pin (1008) connects the driving plate (1007) with a support element (1050) comprising vertical movement means of the heating bell (103).

11. The apparatus (1) according to claim 10, wherein the support element (1050) comprises a support plate (1012) connected to the first pin (1008) and on which a rotary actuator (1013) which rotates a threaded bar (1014) is fastened, there being fastened, to the support plate (1012), a vertical guide element (1015) which comprises a rail (1016) on which a sliding element (1017) integral with the heating bell (103) vertically slides, and comprises a threaded sleeve (1018) slidingly engaged with the threaded bar (1014) so that a rotation of the latter in one direction or the other corresponds to an upwards or downwards sliding of the heating bell (103).

12. A machine (50, 500, 1500) for blowing or stretch-blowing containers from preforms (P), comprising a single base (54, 540) on which there are located:

   - an apparatus (1, 501) for heating preforms (P) as outlined in any one of claims 1 to 11;
   - a blowing/stretch-blowing carousel (51);
   - transfer stars (52, 53) for the preforms (P) or for the containers.

13. The machine (50, 500, 1500) according to claim 12, wherein said machine is coupled with a loading system (56, 520) of the preforms, which places the preforms in vertical position and feeds them to the heating apparatus (1, 501) to which it is connected.

14. The machine (500) according to claim 13, wherein the loading system (520) comprises an auger member (560, 1020) and a transfer star (580), the auger member (560, 1020) comprising one or two augers having varying pitch helical grooves, configured so that the pitch at the transfer star (580) corresponds to the one of the spindles (11) of the heating apparatus (1, 501).

**15.** The machine according to claim 14, wherein the auger member (1020) comprises two augers (1020a, 1020b) placed side-by-side and rotatable, between which the preforms (P) are transported, the two augers (1020a, 1020b) having:

- a varying diameter between a first stretch with smaller diameter, so as to create a greater opening between the two facing augers, and a second stretch with larger diameter;
- a varying helical pitch and a varying depth recess such as to allow the almost vertical positioning of the preforms in a first stretch and the completely vertical positioning of the preforms (P) in a second stretch, wherein said recess has a size which is close to the outer diameter of the preforms.

**Patentansprüche**

**1.** Kontinuierliche oder diskontinuierliche Vorrichtung (1, 501) vom linearen Typ zum Erwärmen von Vorformlingen (P), umfassend eine Mehrzahl von Heizeinrichtungen, die dazu konfiguriert sind, außerhalb des Vorformlings angeordnet zu werden und eine elektromagnetische Strahlung in dem Infrarotbereich abzustrahlen, die durch eine oder mehrere monochromatische Laserquellen erzeugt wird, wobei die Vorrichtung **dadurch gekennzeichnet, dass** sie in einem solchen Heizelement eine Strahlungsscheibe nach einer radialen Symmetrie in Bezug auf das Zentrum der Vorformlingsachse bildet.

**2.** Vorrichtung (1, 501) nach Anspruch 1, wobei die Vorrichtung umfasst:

Transportmittel (59), die dazu konfiguriert sind, eine Mehrzahl von Spindeln (11) kontinuierlich zu bewegen, die eingerichtet sind, die Vorformlinge (P) entlang eines Pfades zu transportieren, der eine erste geradlinige Strecke (61) umfasst, die gegenüber einer Bearbeitungslinie (60) der Vorformlinge (P) liegt, wobei die Vorrichtung (1) an der ersten geradlinigen Stecke (61) ein System (68) zum Bewegen der Heizeinrichtungen (101) umfasst, das einen Tragrahmen (69) für eine Mehrzahl von Heizeinrichtungen (101) umfasst, wobei der Tragrahmen (69) wie folgt beweglich ist:

- horizontal nach einem ersten Bewegungsgesetz, das für eine homokinetische Bewegung in Bezug auf die Bewegung der Spindeln (11), die die Vorformlinge (P) in die Vorschubrichtung der Spindeln (11) bringen, sowie für eine beschleunigte Bewegung in die entgegengesetzte Richtung konfiguriert ist, und
- vertikal nach einem zweiten Bewegungsgesetz, das dazu konfiguriert ist, sodass während des Weges der Spindeln (11) entlang der ersten geradlinigen Strecke (61) die Heizeinrichtungen (101) einen vollständigen Auf- und Ab-Bewegungspfad zwischen einer abgesenkten, gelösten Position mit den Vorformlingen (P) und einer angehobenen Position, wobei die Vorformlinge (P) in die jeweiligen Heizungsglocken (103) eingeführt sind, zurücklegen;

oder wobei die Vorrichtung umfasst:

Transportmittel (590), die dazu konfiguriert sind, eine Mehrzahl von Spindeln (11), die eingerichtet sind, die Vorformlinge (P) zu transportieren, diskontinuierlich und intermittierend entlang eines Pfades zu bewegen, der eine erste geradlinige Strecke (610) umfasst, die gegenüber einer Heizungslinie der Vorformlinge (P) liegt, eine zweite geradlinige Strecke (620) umfasst, die zu der ersten geradlinigen Strecke (610) entgegengesetzt und parallel ist, sowie entsprechende gekrümmte Strecken (630) an den Transportmitteln (590), wobei die Vorrichtung (501) an der ersten geradlinigen Strecke (610) ein Bewegungssystem (680) der Heizeinrichtungen (101) und an der zweiten geradlinigen Strecke (620), die sich an einer Blas-/Streckblaslinie der Vorformlinge befindet, ein System beweglicher Halbformen (800a, 800b) umfasst, die an den Vorformlingen (P) an gegenüberliegenden Seiten der zweiten geradlinigen Strecke (620) angeordnet sind, wobei die Halbformen (800a, 800b) zueinander beweglich sind, zwischen einer offenen und einer geschlossenen Stellung, um eine Form zu bilden, und mit pneumatischen Blas- oder Streckblassystemen (803) gekoppelt sind, die dazu konfiguriert sind, Druckluft durch den Vorformling-Hals aufzublasen, wenn dieser in die Halbformen (800a, 800b) eingeführt ist, und sie geschlossen sind, und wobei das Bewegungssystem (680) einen Stützrahmen (690) für eine Mehrzahl von Heizeinrichtungen (101) umfasst, die mit derselben Teilung wie die Spindeln (11) angeordnet sind, wobei der Stützrahmen (690) vertikal nach einem zweiten Bewegungsgesetz beweglich ist, das dazu konfiguriert ist, sodass während des Weges der Spindeln (11) entlang der ersten geradlinigen Strecke (61) die Heizeinrichtungen (101) einen vollständigen Auf- und Ab-Bewegungspfad zwischen einer abgesenkten gelösten Position mit den Vorformlingen (P) und einer angehobenen Position, wobei die Vorformlinge (P) in die jeweiligen Heizungsglocken (103) eingeführt sind, zurücklegen, und wobei

die Heizeinrichtung (101) eine Mehrzahl von reflektierenden Flächen (112a, 112b, 112c, 112d) umfasst, wobei jede dieser reflektierenden Flächen (112a, 112b, 112c, 112d) dazu konfiguriert ist, einen Vorformling (P) einzeln von außen abzustrahlen, und wobei

die elektromagnetische Strahlung durch eine Laserquelle erzeugt wird, die aus einem einzigen optischen Resonator oder einem einzigen aktiven Material oder einem einzelnen Emitter besteht oder durch eine Laserquelle, die aus einer Anordnung von optischen Resonatoren besteht, von denen jeder eine monochromatische Strahlung eine modulare Wellenlänge aufweist, die unabhängig von den anderen ist, die im Betrieb synchronisiert sind und die in der Lage sind, die verschiedenen Strahlungen auf einen einzigen optischen Pfad zu konvergieren, und wobei die Laserquelle mittels eines oder mehrerer Lasereinrichtungen, beispielsweise Diodenquelle, Halbleiterquelle oder Faserquelleneinrichtung, erhalten wird.

3. Vorrichtung (1, 501) nach Anspruch 2,
wobei sich die elektromagnetische Strahlung, die durch die Lasereinrichtung emittiert wird, in dem Wellenlängenbereich von 1620-2100 nm und/oder 1652-1674 nm und/oder 1701-1880 nm und/oder 1907-1919 nm und/oder 1951-2000 nm und/oder 1803-1813 nm und/oder 1903-1913 nm und/oder 1940-1955 nm und/oder 1941-1961 nm und/oder 1972-2012 nm befindet; oder die elektromagnetische Strahlung eine Wellenlänge von 1661 nm und/oder 1721 nm und/oder 1908 nm und/oder 1951 nm und/oder 1992 nm aufweist.

4. Vorrichtung (1, 501) nach einem der Ansprüche 2 bis 3, wobei die Heizeinrichtung (101) eine Heizungsglocke (103) umfasst, die dazu konfiguriert ist, einen Vorformling (P) darin aufzunehmen, wobei die Heizungsglocke (103) einen im Wesentlichen zylindrischen Hohlkörper (103a), einen konischen Abschnitt (103b), der an einem Ende des Körpers (103a) angeordnet ist, und einen reflektierenden Abschnitt (103c), der an dem gegenüberliegenden Ende des Körpers (103a) angeordnet ist, umfasst und eine Öffnung (109) umfasst, die koaxial zu der Längsachse (X-X) der Heizungsglocke (103) an dem reflektierenden Abschnitt (103c) liegt, sowie ein Kollimator-Element (110) an dem Ende des konischen Abschnitts (103b), wobei das Kollimator-Element (110) mit einer optischen Faser (113) verbunden ist, um einen kollimierten Bündel von Infrarotstrahlung mit vorgegebenen Wellenlängen zuzuführen, und wobei stromabwärts des optischen Pfads des Kollimator-Elements (110) der konische Abschnitt (103b) der Heizungsglocke (103) eine erste Linse oder Axicon (111a) umfasst, die sich an dem Ende des konischen Abschnitts (103b) befindet, der mit dem Kollimator-Element (110) verbunden ist, und eine zweite Linse oder Axicon (111b) umfasst, die in dem unteren Abschnitt des zylindrischen Körpers (103a) angeordnet ist, um einen Strahlungszylinder (RI) mit einem geeigneten Homogenitätsniveau zu erzeugen, und wobei

der reflektierende Abschnitt (103c) ein System aus kegelstumpfförmigen reflektierenden Flächen (112a, 112b, 112c, 112d) umfasst, das in Sequenz von dem zylindrischen Körper (103a) bis zu der Öffnung (109) umfasst, eine erste kegelstumpfförmige reflektierende Fläche (112a), die sich nach außen erweitert, eine zweite kegelstumpfförmige reflektierende Fläche (112b), die sich zu der Längsachse (X-X) der Heizungsglocke (103) konvergiert, eine dritte kegelstumpfförmige reflektierende Fläche (112c), die sich zu der Längsachse (X-X) konvergiert, und eine vierte kegelstumpfförmige reflektierende Fläche (112d), die sich nach oben erweitert, zwischen der ersten reflektierenden Fläche (112a) und der zweiten reflektierenden Fläche (112b) angeordnet ist, wobei die erste, die zweite, die dritte und die vierte kegelstumpfförmige reflektierende Fläche (112a, 112b, 112c, 112d) jeweils mit einem Winkel $\alpha$, einem Winkel $\beta$, einem Winkel $\gamma$ und einem Winkel $\delta$ relativ zu jeweiligen zylindrischen Flächen, die koaxial zu der Achse (X-X) sind, geneigt sind, wobei der Winkel $\alpha$ kleiner als der Winkel $\beta$ ist und größer als oder gleich dem Winkel $\gamma$ und dem Winkel $\delta$ ist, und wobei eine im Wesentlichen zylindrische absorbierende Fläche (112e) zwischen dem Körper (103a) und der ersten kegelstumpfförmigen reflektierenden Fläche (112a) angeordnet ist.

5. Die Vorrichtung (1, 501) nach einem der Ansprüche 2 bis 4, umfassend eine Laserquelle für jede Heizungsglocke (103)

6. Die Vorrichtung (1) nach Anspruch 1, umfassend eine Mehrzahl fester Heizeinrichtungen (101) und Transportmittel (8), die eingerichtet sind, die Vorformlinge (P) diskontinuierlich entlang einer Bearbeitungslinie (12) zu bewegen, sodass sich eine Heizeinrichtung (101) an jedem Vorformling befindet, wobei die Transportmittel (8) eine Schiene (9) umfassen, auf der eine Mehrzahl von Spindeln (11) gleitet, die eingerichtet sind, mit den Vorformlingen (P) in Eingriff zu kommen, wobei die Schiene (9) einer Stützstruktur (24) beweglich zugeordnet ist, die sich mindestens in die Strecke der Bearbeitungslinie (12) erstreckt, wobei die Schiene (9) entlang spezifischer Führungen (9a) zwischen einer abgesenkten Position, wobei die Vorformlinge (P) in die jeweiligen Heizungsglocken (103) eingeführt sind, und einer angehobenen Löseposition der Vorformlinge (P) aus den jeweiligen Heizungsglocken (103) vertikal gleitend ist.

7. Vorrichtung (1) nach Anspruch 1 umfassend Transportmittel, die dazu konfiguriert sind, eine Mehrzahl von Spindeln (11) kontinuierlich zu bewegen, die eingerichtet sind, die Vorformlinge (P) entlang einer Bearbeitungslinie (60) der Vorformlinge (P) zu transportieren, wobei die Vorrichtung (1) an der Bearbeitungslinie (60) eine Nocke (1000) umfasst, die mit den Spindeln (11) zusammenwirkt, um den Vorformling (P) nach einem vorgegebenen Bewegungsgesetz abzusenken oder anzuheben, das sich aus der Kombination der horizontalen Bewegung entlang der Bearbeitungslinie (60) und der vertikalen Bewegung des Vorformlings (P), die durch die Form der Nocke (1000) bestimmt wird, ergibt, und wobei die Heizungsglocken (103) mit einem homokinetischen Bewegungsgesetz in Bezug auf die Gleitgeschwindigkeit der Spindeln (11), entlang einer Schaltung (1001) bestehend aus zwei gegenüberliegenden geradlinigen Strecken (1001a, 1001b) und zwei gegenüberliegenden Kreisbogenstrecken(1001c, 1001d) beweglich sind, wobei sich eine erste geradlinige Strecke (1001a) neben der Bearbeitungslinie (60) befindet.

8. Vorrichtung (1) nach Anspruch 1, umfassend Transportmittel, die dazu konfiguriert sind, eine Mehrzahl von Spindeln (11) kontinuierlich zu bewegen, die eingerichtet sind, die Vorformlinge (P) entlang einer Bearbeitungslinie (60) der Vorformlinge (P) zu transportieren, und wobei die Heizungsglocken (103) mit einem homokinetischen oder nahezu homokinetischen Bewegungsgesetz in Bezug auf die Gleitgeschwindigkeit der Spindeln (11) entlang einer kreisförmigen Schaltung (1011) oder entlang einer gleichseitig dreieckigen Schaltung (1021) oder entlang einer Schaltung (1031) umfassend zwei gegenüberliegende geradlinige Strecken (1031a, 1031b) und zwei gegenüberliegende Kreisbogenstrecken (1031c, 1031d) beweglich sind, wobei die geradlinigen Strecken (1031a, 1031b) um einen Winkel ω in Bezug auf eine horizontale Geraden geneigt sind.

9. Vorrichtung (1) nach einem der Ansprüche 7 bis 8, wobei die Schaltung (1001, 1011, 1021, 1031) aus einer ersten und einer zweiten parallelen Kette (1002, 1003) besteht, die auf entsprechenden Platten (1004, 1005) angeordnet sind, die entlang einer horizontalen Richtung beabstandet sind, wobei die Ketten (1002, 1003) durch jeweilige Zahnräder (1006) in Bewegung versetzt werden, wobei jede Heizungsglocke (103) mit einer Antriebsplatte (100/9 mittels eines ersten Verbindungsstiftes (1008) verbunden ist, der durch die Glieder der ersten Kette (1002) durchgeht, wobei die Antriebsplatte (1007) an einem zum ersten Verbindungsstift (1008) gegenüberliegenden Ende ein Kippelement (1009) aufweist, das mit einem zweiten Verbindungsstift (1010) endet, der zwischen die Glieder der zweiten Kette (1003) eingeführt wird, sodass sich die Heizungsglocken (103) entlang der Schaltung (1001) bewegen, indem sie stets die vertikale Position mit der nach oben gerichteter Öffnung (109) halten.

10. Vorrichtung (1) nach Anspruch 1 umfassend Transportmittel, die dazu konfiguriert sind, eine Mehrzahl von Spindeln (11) kontinuierlich zu bewegen, die eingerichtet sind, die Vorformlinge (P) entlang einer Bearbeitungslinie (60) der Vorformlinge (P) zu transportieren,

    und wobei die Heizungsglocken (103) mit einem homokinetischen Bewegungsgesetz in Bezug auf die Gleitgeschwindigkeit der Spindeln (11) entlang einer Schaltung (1001) umfassend zwei gegenüberliegende geradlinige Strecken (1001a, 1001b) und zwei gegenüberliegende Kreisbogenstrecken (1001c, 1001d) beweglich sind, wobei sich eine erste geradlinige Strecke (1001a) neben der Bearbeitungslinie (60) befindet, und wobei die Schaltung (1001) aus einer ersten und einer zweiten parallelen Kette (1002, 1003) besteht, die auf entsprechenden Platten (1004, 1005) angeordnet sind, die entlang einer horizontalen Richtung beabstandet sind, wobei die Ketten (1002, 1003) durch jeweilige Zahnräder (1006) in Bewegung versetzt werden, wobei jede Heizungsglocke (103) mit einer Antriebsplatte (1007) mittels eines ersten Verbindungsstiftes (1008) verbunden ist, der sich durch die Glieder der ersten Kette (1002) durchgeht, wobei die Antriebsplatte (1007) an einem zum ersten Verbindungsstift (1008) gegenüberliegenden Ende ein Kippelement (1009) aufweist, das mit einem zweiten Verbindungsstift (1010) endet, der zwischen die Glieder der zweiten Kette (1003) eingeführt ist, sodass sich die Heizungsglocken (103) entlang der Schaltung (1001) bewegen, indem sie stets die vertikale Position mit der nach oben gerichteten Öffnung (109) halten, und wobei der erste Verbindungsstift (1008) die Antriebsplatte (1007) mit einem Stützelement (1050) verbindet, das vertikale Bewegungsmittel der Heizungsglocke (103) umfasst.

11. Vorrichtung (1) nach Anspruch 10, wobei das Stützelement (1050) eine Stützplatte (1012) umfasst, die mit dem ersten Stift (1008) verbunden ist und auf der ein Drehaktuator (1013), der eine Gewindestange (1014) dreht, befestigt wird, wobei ein vertikales Führungselement (1015) an der Stützplatte (1012) befestigt wird, wobei das vertikale Führungselement eine Schiene (1016) umfasst, auf der ein einstückig mit der Heizungsglocke (103) ausgebildetes Schiebelement (1017) vertikal gleitet, und ein Gewindehülse (1018) umfasst, die mit der Gewindestange (1014) gleitend in Eingriff steht, sodass eine Drehung des letzteren in die eine oder andere Richtung einem Aufwärts- oder Abwärtsgleiten der Heizungsglocke (103) entspricht.

12. Maschine (50, 500, 1500) zum Blasformen oder Streckblasformen von Behältern aus Vorformlingen (P), umfassend eine einzige Basis (54, 540), auf der sich befinden:

- eine Vorrichtung (1, 501) zum Erwärmen von Vorformlingen (P) nach einem der Ansprüche 1 bis 11;
- ein Blasformen-/Streckblasformen-Karussell (51);
- Übergabesternräder (52, 53) für die Vorformlinge (P) oder für die Behälter.

13. Maschine (50, 500, 1500) nach Anspruch 12, wobei die Maschine mit einem Ladesystem (56, 520) der Vorformlinge gekoppelt ist, das die Vorformlinge in vertikaler Position anordnet und sie der Erwärmungsvorrichtung (1, 501), mit der es verbunden ist, zuführt.

14. Maschine (500) nach Anspruch 13, wobei das Ladesystem (520) ein Schneckenelement (560, 1020) und ein Übergabesternrad (580) umfasst, wobei das Schneckenelement (560, 1020) eine oder zwei Schnecken mit variabler Steigung aufweist, die dazu konfiguriert sind, sodass die Steigung am Übergabesternrad (580) derjenigen der Spindeln (11) der Erwärmungsvorrichtung (1, 501) entspricht.

15. Maschine nach Anspruch 14, wobei das Schneckenelement (1020) zwei nebeneinander angeordnete und drehbare Schnecken (1020a, 1020b) umfasst, zwischen denen die Vorformlinge (P) transportiert werden, wobei die beiden Schnecken (1020a, 1020b) aufweisend:

- einen variablen Durchmesser zwischen einer ersten Strecke mit kleinerem Durchmesser, um eine größere Öffnung zwischen den zwei gegenüberliegenden Schnecken zu schaffen, und einer zweiten Strecke mit größerem Durchmesser;
- eine variable Steigung und eine Vertiefung mit variabler Tiefe, sodass eine nahezu vertikale Positionierung der Vorformlinge in einer ersten Strecke und die vollständig vertikale Positionierung der Vorformlinge (P) in einer zweiten Strecke ermöglicht wird, wobei die Vertiefung eine Größe aufweist, die dem Außendurchmesser der Vorformlinge nahekommt.


## Revendications

1. Un appareil (1, 501) continu ou discontinu de type linéaire pour chauffer des préformes (P), comprenant une pluralité de dispositifs de chauffage configurés de manière à être disposés à l'extérieur de la préforme et à irradier un rayonnement électromagnétique dans l'infrarouge généré par une ou plusieurs sources laser monochromatiques, l'appareil étant **caractérisé en ce qu'**il forme, dans un tel élément chauffant, un disque de rayonnement selon une symétrie radiale par rapport au centre de l'axe de la préforme.

2. L'appareil (1, 501) selon la revendication 1, dans lequel l'appareil comprend :
des moyens de transport (59) configurés de manière à déplacer continûment une pluralité de broches (11) adaptées pour transporter les préformes (P) le long d'un trajet comprenant un premier tronçon rectiligne (61), correspondant à une ligne de traitement (60) des préformes (P), l'appareil (1) comprenant, au niveau du premier tronçon rectiligne (61), un système (68) de déplacement des dispositifs de chauffage (101) comprenant un châssis de support (69) pour une pluralité de dispositifs de chauffage (101), le châssis de support (69) étant mobile :

horizontalement selon une première loi de mouvement configurée pour un mouvement homocinétique par rapport au mouvement des broches (11) amenant les préformes (P) dans la direction d'avancement des broches (11), et pour un mouvement accéléré dans la direction opposée, et
verticalement selon une seconde loi de mouvement configurée de manière à ce que, pendant le déplacement des broches (11) le long du premier tronçon rectiligne (61), les dispositifs de chauffage (101) effectuent un trajet complet de montée et de descente entre une position abaissée désengagée des préformes (P) et une position relevée dans laquelle les préformes (P) sont insérées dans les cloches de chauffage respectives (103) ;
ou dans lequel l'appareil comprend :

des moyens de transport (590) configurés pour déplacer de manière discontinue et intermittente une pluralité de broches (11) adaptées pour transporter les préformes (P) le long d'un trajet comprenant un premier tronçon rectiligne (610), correspondant à une ligne de chauffage des préformes (P), un second tronçon rectiligne (620) opposé et parallèle au premier tronçon rectiligne (610), et des tronçons curvilignes respectifs (630) au niveau des moyens de transport (590),

dans lequel l'appareil (501) comprend, au niveau du premier tronçon rectiligne (610), un système de déplacement (680) des dispositifs de chauffage (101) et, au niveau du second tronçon rectiligne (620), correspondant à une ligne de soufflage/étirage-soufflage des préformes, un système de demi-moules mobiles (800a, 800b) positionnés au niveau des préformes (P) de part et d'autre du second tronçon rectiligne (620), les demi-moules (800a, 800b) étant mobiles l'un vers l'autre, entre une position ouverte et une position fermée, pour former un moule, et étant couplés à des systèmes de soufflage pneumatique ou d'étirage-soufflage (803) configurés pour insuffler de l'air comprimé à travers le col de la préforme lorsque celle-ci est insérée dans les demi-moules (800a, 800b) et que ceux-ci sont fermés, et

dans lequel le système de déplacement (680) comprend un châssis de support (690) pour une pluralité de dispositifs de chauffage (101) qui sont disposés avec le même pas que les broches (11), le châssis de support (690) étant mobile verticalement selon une seconde loi de mouvement configurée de manière à ce que, pendant le déplacement des broches (11) le long du premier tronçon rectiligne (61), les dispositifs de chauffage (101) effectuent un trajet complet de montée et de descente entre une position abaissée désengagée des préformes (P) et une position relevée dans laquelle les préformes (P) sont insérées dans les cloches de chauffage respectives (103), et dans lequel

le dispositif de chauffage (101) comprend une pluralité de surfaces réfléchissantes (112a, 112b, 112c, 112d), chacune desdites surfaces réfléchissantes (112a, 112b, 112c, 112d) étant configurée pour irradier individuellement une préforme (P) de l'extérieur, et dans lequel

le rayonnement électromagnétique est généré par une source laser formée par un unique résonateur optique ou un matériau actif unique ou un émetteur unique, ou par une source laser formée par un assemblage de résonateurs optiques, chacun avec un rayonnement monochromatique ayant une longueur d'onde modulaire et indépendante des autres, qui sont synchronisés en fonctionnement et capables de faire converger les différents rayonnements sur un même trajet optique et dans lequel ladite source laser est obtenue au moyen d'un ou plusieurs dispositifs laser, par exemple une source à diodes, une source à semi-conducteurs ou un dispositif à fibre optique.

3. L'appareil (1, 501) selon la revendication 2, dans lequel le rayonnement électromagnétique émis par le dispositif laser est compris dans la plage de longueurs d'onde 1620-2100 nm, et/ou 1652-1674 nm et/ou 1701-1880 nm et/ou 1907-1919 nm et/ou 1951-2000 nm, et/ou 1803-1813 nm et/ou 1903-1913 nm et/ou 1940-1955 nm et/ou 1941-1961 nm et/ou 1972-2012 nm ; ou le rayonnement électromagnétique a une longueur d'onde de 1661 nm et/ou 1721 nm et/ou 1908 nm et/ou 1951 nm et/ou 1992 nm.

4. L'appareil (1, 501) selon l'une quelconque des revendications 2 à 3, dans lequel le dispositif de chauffage (101) comprend une cloche de chauffage (103) configurée pour recevoir une préforme (P) à l'intérieur, dans lequel ladite cloche de chauffage (103) comprend un corps creux sensiblement cylindrique (103a), une portion conique (103b) placée à une extrémité du corps (103a), et une portion réfléchissante (103c) placée à l'extrémité opposée du corps (103a), et comprend une ouverture (109), coaxiale à l'axe longitudinal (X-X) de la cloche de chauffage (103), au niveau de la portion réfléchissante (103c), et un élément collimateur (110) à l'extrémité de la portion conique (103b), l'élément collimateur (110) étant connecté à une fibre optique (113) pour transmettre un faisceau collimaté de rayonnement infrarouge avec des longueurs d'onde prédéterminées, et dans lequel, en aval du trajet optique de l'élément collimateur (110), la portion conique (103b) de la cloche de chauffage (103) comprend une première lentille ou axicone (111a), placée à l'extrémité de ladite portion conique (103b) connectée à l'élément collimateur (110), et une seconde lentille ou axicone (111b) placée dans la partie inférieure du corps cylindrique (103a), de manière à générer un cylindre de rayonnement (Rl) avec un degré d'homogénéité adéquat, et dans lequel la portion réfléchissante (103c) comprend un système de surfaces réfléchissantes tronconiques (112a, 112b, 112c, 112d) comprenant, en séquence depuis le corps cylindrique (103a) vers l'ouverture (109), une première surface réfléchissante tronconique (112a) évasée vers l'extérieur, une deuxième surface réfléchissante tronconique (112b) convergeant vers l'axe longitudinal (X-X) de la cloche de chauffage (103), une troisième surface réfléchissante tronconique (112c) convergeant vers l'axe longitudinal (X-X), et une quatrième surface réfléchissante tronconique (112d) évasée vers le haut, placée entre la première surface réfléchissante (112a) et la deuxième surface réfléchissante (112b), dans lequel les première, deuxième, troisième et quatrième surfaces réfléchissantes tronconiques (112a, 112b, 112c) sont inclinées d'un angle $\alpha$, un angle $\beta$, un angle $\gamma$ et un angle $\delta$, respectivement, par rapport à des surfaces cylindriques respectives qui sont coaxiales à l'axe (X-X), dans lequel l'angle $\alpha$ est plus petit que l'angle $\beta$ et est supérieur ou égal à l'angle $\gamma$ et à l'angle $\delta$, et dans lequel une surface absorbante sensiblement cylindrique (112e) est placée entre le corps (103a) et la première surface réfléchissante tronconique (112a).

**5.** L'appareil (1, 501) selon l'une quelconque des revendications 2 à 4, comprenant une source laser pour chaque cloche de chauffage (103)

**6.** L'appareil (1) selon la revendication 1, comprenant une pluralité de dispositifs de chauffage fixes (101) et des moyens de transport (8) adaptés pour déplacer de manière discontinue les préformes (P) le long d'une ligne de traitement (12) de sorte qu'un dispositif de chauffage (101) corresponde à chaque préforme, dans lequel les moyens de transport (8) comprennent une piste (9) sur laquelle glisse une pluralité de broches (11) adaptées pour engager lesdites préformes (P), dans lequel la piste (9) est associée de manière mobile à une structure de support (24) qui s'étend au moins dans le tronçon de la ligne de traitement (12), la piste (9) étant verticalement coulissante le long de guides spécifiques entre une position abaissée dans laquelle les préformes (P) sont insérées dans les cloches de chauffage (103) respectives, et une position relevée de désengagement des préformes (P) des cloches de chauffage (103) respectives.

**7.** L'appareil (1) selon la revendication 1, comprenant des moyens de transport configurés de manière à déplacer continûment une pluralité de broches (11) adaptées pour transporter les préformes (P) le long d'une ligne de traitement (60) des préformes (P), l'appareil (1) comprenant, au niveau de la ligne de traitement (60), une came (1000) qui interagit avec lesdites broches (11) pour abaisser ou relever la préforme (P) selon une loi de mouvement prédéfinie résultant de la combinaison du mouvement horizontal le long de la ligne de traitement (60) et du mouvement vertical de la préforme (P) dicté par la forme de la came (1000), et dans lequel les cloches de chauffage (103) sont mobiles, avec une loi de mouvement homocinétique par rapport à la vitesse de glissement des broches (11), le long d'un circuit (1001) comprenant deux tronçons rectilignes opposés (1001a, 1001b) et deux tronçons en arc de cercle opposés (1001c, 1001d), dans lequel un premier tronçon rectiligne (1001a) est adjacent à la ligne de traitement (60)

**8.** L'appareil (1) selon la revendication 1, comprenant des moyens de transport configurés de manière à déplacer continûment une pluralité de broches (11) adaptées pour transporter les préformes (P) le long d'une ligne de traitement (60) des préformes (P), et dans lequel les cloches de chauffage (103) sont mobiles, avec une loi de mouvement homocinétique ou quasi homocinétique par rapport à la vitesse de glissement des broches (11), le long d'un circuit circulaire (1011) ou le long d'un circuit triangulaire équilatéral (1021) ou le long d'un circuit (1031) comprenant deux tronçons rectilignes opposés (1031a, 1031b) et deux tronçons en arc de cercle opposés (1031c, 1031d), dans lequel lesdits tronçons rectilignes (1031a, 1031b) sont inclinés d'un angle $\omega$ par rapport à une ligne droite horizontale.

**9.** L'appareil (1) selon l'une quelconque des revendications 7 à 8, dans lequel le circuit (1001, 1011, 1021, 1031) est formé par une première et une deuxième chaîne parallèles (1002, 1003) disposées sur des panneaux respectifs (1004, 1005) espacés dans une direction horizontale, les chaînes (1002, 1003) étant mises en mouvement par des roues dentées respectives (1006), dans lequel chaque cloche de chauffage (103) est connectée à une plaque de commande (1007) au moyen d'un premier axe de liaison (1008) traversant les maillons de la première chaîne (1002), dans lequel la plaque de commande (1007) comprend, à une extrémité opposée au premier axe de liaison (1008), un élément d'oscillation (1009) se terminant par un second axe de liaison (1010) qui est inséré entre les maillons de la deuxième chaîne (1003), de sorte que les cloches de chauffage (103) se déplacent le long du circuit (1001) en maintenant constamment la position verticale avec l'ouverture (109) tournée vers le haut.

**10.** L'appareil (1) selon la revendication 1, comprenant des moyens de transport configurés de manière à déplacer continûment une pluralité de broches (11) adaptées pour transporter les préformes (P) le long d'une ligne de traitement (60) des préformes (P),

et dans lequel les cloches de chauffage (103) sont mobiles, avec une loi de mouvement homocinétique par rapport à la vitesse de glissement des broches (11), le long d'un circuit (1001) comprenant deux tronçons rectilignes opposés (1001a, 1001b) et deux tronçons en arc de cercle opposés (1001c, 1001d), dans lequel un premier tronçon rectiligne (1001a) est adjacent à la ligne de traitement (60),

et dans lequel le circuit (1001) est formé par une première et une deuxième chaîne parallèles (1002, 1003) disposées sur des panneaux respectifs (1004, 1005) espacés dans une direction horizontale, les chaînes (1002, 1003) étant mises en mouvement par des roues dentées respectives (1006), dans lequel chaque cloche de chauffage (103) est connectée à une plaque de commande (1007) au moyen d'un premier axe de liaison (1008) traversant les maillons de la première chaîne (1002), dans lequel la plaque de commande (1007) comprend, à une extrémité opposée au premier axe de liaison (1008), un élément d'oscillation (1009) se terminant par un second axe de liaison (1010) qui est inséré entre les maillons de la deuxième chaîne (1003), de sorte que les cloches de chauffage (103) se déplacent le long du circuit (1001) en maintenant constamment la position verticale avec l'ouverture (109) tournée vers le haut,

et dans lequel le premier axe de liaison (1008) relie la plaque de commande (1007) à un élément de support (1050) comprenant des moyens de déplacement vertical de la cloche de chauffage (103).

11. L'appareil (1) selon la revendication 10, dans lequel l'élément de support (1050) comprend une plaque de support (1012) connectée au premier axe (1008) et sur laquelle est fixé un actionneur rotatif (1013) qui fait tourner une barre filetée (1014), étant fixé à la plaque de support (1012) un élément de guidage vertical (1015) qui comprend un rail (1016) sur lequel un élément coulissant (1017) solidaire de la cloche de chauffage (103) coulisse verticalement, et comprend un manchon fileté (1018) engagé coulissant avec la barre filetée (1014) de sorte qu'une rotation de cette dernière dans un sens ou dans l'autre corresponde à un coulissement vers le haut ou vers le bas de la cloche de chauffage (103).

12. Une machine (50, 500, 1500) pour le soufflage ou le soufflage-étirage de récipients à partir de préformes (P), comprenant une base unique (54, 540) sur laquelle sont situés :

- un appareil (1, 501) pour chauffer des préformes (P) tel que décrit dans l'une quelconque des revendications 1 à 11 ;
- un carrousel de soufflage/étirage-soufflage (51) ;
- des étoiles de transfert (52, 53) pour les préformes (P) ou pour les récipients.

13. La machine (50, 500, 1500) selon la revendication 12, dans laquelle ladite machine est couplée à un système de chargement (56, 520) des préformes, qui place les préformes en position verticale et les alimente vers l'appareil de chauffage (1, 501) auquel il est connecté.

14. La machine (500) selon la revendication 13, dans laquelle le système de chargement (520) comprend un élément à vis sans fin (560, 1020) et une étoile de transfert (580), l'élément à vis sans fin (560, 1020) comprenant une ou deux vis ayant des rainures hélicoïdales à pas variable, configurées de telle sorte que le pas au niveau de l'étoile de transfert (580) corresponde à celui des broches (11) de l'appareil de chauffage (1, 501).

15. La machine selon la revendication 14, dans laquelle l'élément à vis sans fin (1020) comprend deux vis (1020a, 1020b) placées côte à côte et rotatives, entre lesquelles sont transportées les préformes (P), les deux vis (1020a, 1020b) ayant :

- un diamètre variable entre un premier tronçon de plus petit diamètre, de manière à créer une ouverture plus grande entre les deux vis opposées, et un second tronçon de diamètre plus grand ;
- un pas hélicoïdal variable et une gorge de profondeur variable de manière à permettre la position presque verticale des préformes dans un premier tronçon et la position totalement verticale des préformes (P) dans un second tronçon, dans lequel ladite gorge a une taille proche du diamètre extérieur des préformes.

FIG. 1

EP 4 319 958 B1

FIG. 2

FIG. 3

FIG. 4

FIG. 5

FIG. 6

FIG. 7

FIG. 8

FIG. 9A

FIG. 9B

EP 4 319 958 B1

FIG. 10

FIG. 11

FIG. 12

FIG. 13

**FIG. 14**

**FIG. 15**

FIG. 16

FIG. 17

FIG. 18

FIG. 19

FIG. 20

FIG. 21

FIG. 22

FIG. 23

FIG. 24

FIG. 25

EP 4 319 958 B1

FIG. 27A

FIG. 26

FIG. 27B

FIG. 27C

EP 4 319 958 B1

FIG. 28A

FIG. 28B

FIG. 29B

FIG. 29A

FIG. 29C

EP 4 319 958 B1

FIG. 30

EP 4 319 958 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3088027 A1
- EP 2561972 B1
- US 9296148 B2
- JP 2009051198 A
- CN 102837420 B
- US 2021023763 A1
- DE 102009047536 A1
- US 2011132892 A1
- US 2012269918 A1
- IT 102019000009591